(19) Europäisches Patentamt
European Patent Office
Office européen des brevets

(11) EP 0 558 047 B1

(12) # EUROPEAN PATENT SPECIFICATION

(45) Date of publication and mention of the grant of the patent:
**20.05.1998 Bulletin 1998/21**

(51) Int Cl.[6]: **C08F 8/32**, C08F 8/44

(21) Application number: **93103080.3**

(22) Date of filing: **26.02.1993**

(54) **Copolymer having amino group and process for production thereof**

Aminogruppen enthaltende Copolymere und Verfahren zur Herstellung

Copolymères contenant des groupes amino et leur procédé de préparation

(84) Designated Contracting States:
**BE DE FR GB IT NL**

(30) Priority: **28.02.1992 JP 41860/92**
**28.02.1992 JP 41861/92**
**28.02.1992 JP 43972/92**
**28.02.1992 JP 43973/92**

(43) Date of publication of application:
**01.09.1993 Bulletin 1993/35**

(73) Proprietor: **DAI-ICHI KOGYO SEIYAKU Co., Ltd.**
**Kyoto-shi, Kyoto-fu (JP)**

(72) Inventors:
- **Kitazawa, Naoki**
**Kyoto-shi, Kyoto-fu (JP)**
- **Hotta, Hiroshi**
**Nishikyo-ku, Kyoto-shi, Kyoto-fu (JP)**
- **Nakayama, Yutaka**
**Kyoto-shi, Kyoto-fu (JP)**

(74) Representative: **VOSSIUS & PARTNER**
**Postfach 86 07 67**
**81634 München (DE)**

(56) References cited:
**EP-A- 0 000 648**
**EP-A- 0 050 994**
**EP-A- 0 331 306**
**EP-A- 0 400 868**
**EP-A- 0 525 793**
**GB-A- 1 075 121**

Remarks:
The file contains technical information submitted after the application was filed and not included in this specification

EP 0 558 047 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

Printed by Jouve, 75001 PARIS (FR)

## Description

The present invention relates to a copolymer having a specific amino group and a process for producing the same. More particularly, it pertains to a novel copolymer having a specific amino group that is usable for high molecular amino reagents, raw materials for functional high molecular compounds, raw materials for adhesives, compatibilizers for polymers, resin dyeing improvers, epoxy resin curing agent, resin modifiers and the like, and to a process for efficiently producing the aforesaid copolymer.

A high molecular compound having a primary amino group in its side chain has heretofore been effectively utilized in a variety of industrial fields because of the high reactive activity of the amino group, that is, facility of reaction with a functional group such as an aldehyde, a ketone, an alkylhalide, an isocyanate, a thioisocyanate, an active double bond, and epoxy compound, a cyanamide, guanidine, urea, an acid, an acid anhydride and acylhalide.

As the above-mentioned high molecular compound having a primary amino group in its side chain, there are known polyvinyl amine produced by hydrolysis of poly-N-vinylacetamide or poly-N-vinylformamide, polyallyl-amine produced by polymerization of allylamine hydrochloride and the like.

However, when the high molecular compound is produced by any of the aforesaid methods, although a polymer or copolymer each having a primary amino group is obtained, there are such limitations that an intended high molecular weight is not always attained or the types of copolymerizable monomers are restricted because of radical polymerization of an amine or a monomer of an amine precursor, and thereby sufficient performance of the product polymer or copolymer is not necessarily exhibited depending upon the purpose of use thereof.

Under such circumstances, there is proposed a process for producing a propylene copolymer having a primary or secondary amine by copolymerizing a silyl group-protected allyl monomer such as a trialkylsilylallylamine or a trialkylsilyldiallylamine with proplylene, followed by decomposition with the addition of a solvent (refer to Japanese Patent Application Laid-Open No. 134007/1991). The aforestated process, however, suffers the disadvantage in that an expensive special monomer is required.

There is also proposed a process in which a nitrile group-containing polystyrene is reduced by the use of a metal hydride such as lithium aluminum hydride to convert the nitrile group into a primary amino group (refer to Japanese Patent Application Laid-Open No. 174405/1991). The above-mentioned process, however, suffers the drawback in that an expensive reducing agent is necessary and the object of polymer is limited to nitrile group-containing copolymers. Examples in which a primary amino group is considered to be unintentionally introduced in part in the side chain of a polymer include the copolymers as disclosed in Japanese Patent Application Laid-Open Nos. 70595/1989 and 85246/1989 and USP No. 4,137,185. In more detail, a maleic anhydride-grafted ethylene/propylene copolymer obtained by grafting maleic anhydride onto an ethylene/propylene copolymer is reacted with a polyamine having at least two primary amino groups such as diethylenetriamine, ethylenediamine and hexamethylenediamine for the imidization of the grafted copolymer. It is thought that in the reaction between a multifunctional acid anhydride such as the maleic anhydride-grafted ethylene/propylene copolymer and a multifunctional polyamine a crosslinking reaction takes place to considerable extent not only during the reaction but also after the reaction.

It is often recognized that the occurrence of crosslinkage during the main reaction brings about increase in the viscosity of the reaction mixture, sometimes gelling thereof, thereby making it impossible to proceed with the reaction thereafter.

For this reason, devices are made in the prior arts to end-cap the primary amine remaining after imidization reaction with acetic anhydride, n-octenylsuccinic anhydride or the like for the purpose of preventing increase in viscosity with the elapse of time arising from the crosslinking reaction.

Japanese Patent Application Laid-Open No. 36248/1990 suggests the reaction of an unsaturated acid anhydride-grafted polyolefin with an diamine, but it does not explicity disclose the production method nor the product. Thus according to the techniques in the prior arts, crosslinkage and/or gelling are inevitable to the best of the experience and knowledge of the present inventors.

Examples of the reaction between a maleic anhydride copolymer or a maleic anhydride-grafted ethylene/propylene copolymer and a primary diamine are disclosed in Japanese Patent Application Laid-Open Nos. 240749/1985, 31864/1989, 146928/1988, 235365/1988 and 199755/1988, any of which, however, is intended for the imide crosslinkage between an acid anhydride group and two primary amino groups in a resin in the absence of a solvent.

It is theoretically considered but is not practical to effect imidization reaction by increasing the molar ratio of primary amino group to succinic anhydride group to the extent that the gelling accompanied by crosslinking reaction is substantially negligible as the method of forming a primary amino group in the side chain of the copolymer by the use of a primary diamine without causing crosslinking reaction.

The above-described techniques have suffered the vital defect in that during the reaction between a primary diamine and a multifunctional acid anhydride group, imidization reaction takes place indiscriminately because of no difference in reactivity between two primary amino groups, resulting in imide crosslinkage.

Hence, the group of the present inventors proposed an improved production process capable of overcoming the

disadvantages of the above-mentioned prior arts as well as a novel copolymer obtained thereby (Japanese Patent Application Nos. 85735/1991, 85736/1991, 191595/1991 and 191596/1991). There is proposed by the group of the present inventors in the patent applications a process for regenerating the amino group by reacting an partially neutralized salt of a diamine between an acid or the reaction product between a diamine and a formyl group-containing compound with a copolymer having succinic anhydride group and thereafter reacting the resultant reaction product with a base or hydrolyzing the reaction product.

The copolymer thus obtained is a non-crosslinked copolymer having a primary amino group bonded thereto via an imide group, and is favorable as a copolymer having a functional group with regard to the general purpose of use. However, a secondary amine usually has a basicity stronger than that of a primary amine, and is eagerly required from the related industries as is the case with a curing agent for epoxy resins.

In response to the aforesaid requirement, there is proposed the use of a copolymer as the latent curing agent for epoxy resins which copolymer is produced by imidizing a styrene/maleic anhydride copolymer with a diamine having primary and secondary amines mixed therein such as p-aminophenol, ethylaminoethylamine and N-aminopropylpiperazine (Japanese Patent Application Laid-Open Nos. 135214/1990 and 135215/1990).

There is also disclosed as the similar technique a copolymer having in the side chain a secondary amine via an imide group which copolymer is produced by a process wherein in the case of reacting for amino modification, a copolymer having succinic anhydride group with a diamine, a maleic anhydride copolymer is reacted with, of course, a diamine subjected to steric hindrance such as 4-amino-2,2,6,6-tetramethylpiperazine and having both a secondary amine and a primary amine or even a diamine subjected to steric hindrance to a minimum such as l-amino-3-methylpropanolamine (Japanese Patent Application Laid-Open No. 93817/1991).

However a secondary amine has, even if subjected to steric hindrance, an amino group having an active hydrogen and therefore, involves the possibility of causing thickening or gelling due to amide crosslinkage prior to imidization in the step of being a maleamide acid in which a copolymer having succinic anhydride group is mixed with a diamine, thus causing difficulty in production itself. Even if an imidized reaction product is finally obtained, it is nothing more than a copolymer having an undesirably high viscosity which clearly suggests partial crosslinkage.

Such being the case, it has heretofore been deemed difficult technologically to obtain a copolymer having a favorable hue free from viscosity increase or gelling due to crosslinkage in the case of introducing a secondary amino group in the side chain of a multifunctional copolymer having a substituted or nonsubstituted succinic anhydride group as the functional group by a high polymer modifying reaction which allows a diamine to act on the copolymer.

EP-A-400 868 discloses a composition comprising reaction product of:

(i) (a) copolymer of ethylene and at least one other alpha-olefin monomer, said copolymer comprising intramolecularly heterogeneous copolymer chains containing at least one crystallizable segment of methylene units and at least one low crystallinity ethylene-alpha-olefin copolymer segment, wherein said at least one crystallizable segment comprises at least 10 weight percent of said copolymer chain and contains at least 57 weight percent ethylene, wherein said low crystallinity segment contains not greater than 53 weight percent ethylene, and wherein said copolymer has a molecular weignt distribution characterized by at least one of a ratio of $\overline{M}_w/\overline{M}_n$ of less than 2 and a ratio of $\overline{M}_z/\overline{M}_w$ of less than 1.8, and wherein at least two portions of an individual intramolecularly heterogeneous chain, each portion comprising at least 5 weight percent of said chain, differ in composition from one another by at least 7 weight percent ethylene, said copolymer grafted with (b) ethylenically monounsaturated carboxylic acid material having 1 to 2 carboxylic acid groups or anhydride group to form grafted ethylene copolymer; and

(ii) at least one or

(a) polyamine having at least two reactive amino groups selected from primary amino groups, secondary amino groups and mixtures thereof,

(b) polyol,

(c) $C_{50}$ to $C_{400}$ hydrocarbyl substituted carboxylic acid component containing 1 to 2 carboxylic acid groups or anhydride group, and polyol, and

(d) polyamine having at least two reactive amino groups selected from primary amino groups, secondary amino groups and mixtures thereof, and $C_{50}$ to $C_{400}$ hydrocarbyl substituted carboxylic acid component containing 1 to 2 carboxylic acid groups or anhydride groups.

EP-A-050994 discloses an oil soluble viscosity index improver for use in lubricating oil and having dispersant properties, and made by a process comprising

a) dissolving an ethylene/α-olefin copolymer having an average molecular weight of about 1000 - 500,000 in a hydrogen-treated mineral oil;

b) reacting the resultant copolymer solution with maleic acid, anhydride or acid-ester in the presence of a free radical-producing catalyst so as to graft succinic groups to the copolymer to form an intermediate; and
c) reacting the intermediate with an aliphatic hydrocarbyl amine having the structure

$$R{-}(NH{-}CH_2CH_2CH_2)_n\ NH_2,$$

wherein R is an aliphatic hydrocarbon group containing from 12 to 33 carbon atoms and n is an integer from 1 to 3, in an amount sufficient to provide at least 0.5 moles of primary amine per mole of succinic groups.

The present invention has been made paying attention to the previous problems as described hereinbefore.

In view of the above, it is a general object of the present invention to overcome the problem in the prior art and to provide a copolymer having a favorable hue free from viscosity increase or gelling due to crosslinkage in the case of introducing a secondary amino group in the side chain of a multifunctional copolymer having a substituted or nonsubstituted succinic anhydride as the functional group by a high polymer modifying reaction which allows a diamine to act on the copolymer.

This object has been achieved by the surprising finding that a copolymer having the properties meeting the above-described purpose is obtained by a process wherein a copolymer having a repeating unit derived from a styrene, an olefin or a derivative thereof, a repeating unit derived from a diene such as butadiene and a repeating unit in which is grafted an acid anhydride such as maleic anhydride or a repeating unit derived from an acid anhydride such as maleic anhydride is reacted with a salt of a specific amine in the presence or absence of a formyl group-containing compound for imidization and the residual acid is removed or a process wherein a reaction product obtained by reacting the aforementioned copolymer with a specific amine and a formyl group-containing compound such as formamide is imidized.

Specifically, the present invention provides a copolymer (copolymer i) or a salt thereof having a molecular weight of 3000 to 500 000 in terms of viscosity-average molecular weight , said copolymer having in a molecule thereof 20 to 99.8 mol% of the repeating unit A represented by the general formula (I); 50 to 0 mol% of the repeating unit B represented by the general formula (II); and 30 to 0.2 mol% of the repeating unit C represented by the general formula (III)

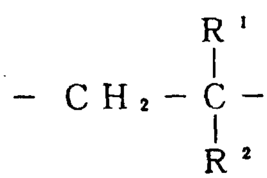

· · · (I)

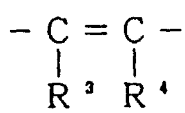

· · · (II)

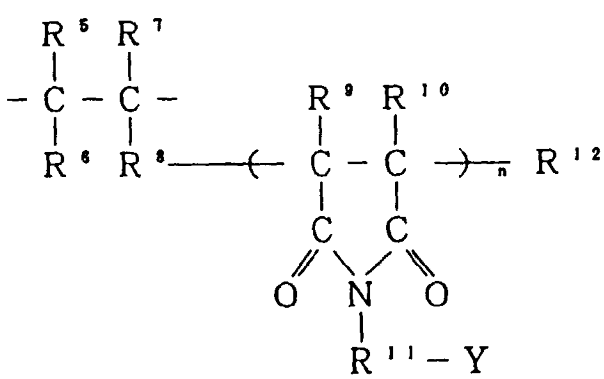

· · · (III)

wherein $R^1$, $R^2$, $R^5$, $R^6$ and $R^7$, independently of one another, are each a hydrogen atom, an alkyl group having 1 to 10 carbon atoms, a cycloalkyl group having 3 to 8 carbon atoms, an aryl group having 6 to 10 carbon atoms, an alkenyl group having 2 to 4 carbon atoms, an alkoxy group having 1 to 4 carbon atoms, an alkoxycarbonyl group having 1 to 18 carbon atoms, an alkylcarboxyl group having 1 to 17 carbon atoms, an alkylcarbonyl group having 1 to 6 carbon atoms, an arylcarbonyl group having 6 to 8 carbon atoms, a halogen atom or a nitrile group; $R^3$ and $R^4$, independently of one another, are each a hydrogen atom, an alkyl group having 1 to 4 carbon atoms, an alkenyl group having 2 to 4 carbon atoms or a halogen atom; $R^8$ is absent or denotes a methylene group or an ethylene group; $R^9$ and $R^{10}$, independently of one another, are each a hydrogen atom, an alkyl group having 1 to 6 carbon atoms or an aryl group having 6 to 8 carbon atoms; $R^{11}$ is an alkylene group having 1 to 18 carbon atoms, a cycloalkylene group having 5 to 17 carbon atoms, an arylene group having 6 to 12 carbon atoms, an arylalkylene group having 7 to 12 carbon atoms or a polyoxyalkylene group having 4 to 30 carbon atoms; $R^{12}$ is a hydrogen group or an alkyl group having 1 to 10 carbon atoms; Y is at least one kind of amino group selected from the general formulae (IV) to (VII)

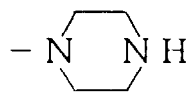 · · · (IV)

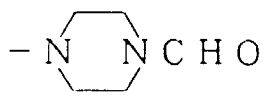 · · · (V)

$-NH-R^{13}$ (VI)

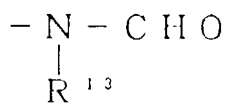 · · · (VII)

wherein $R^{13}$ in the general formulae (VI) and (VII) is an alkyl group having 1 to 6 carbon atoms; $R^1$ to $R^{13}$ may be the same or different among the repeating units; and n is an integer from 1 to 10.

In addition, the present invention provides a copolymer (copolymer ii) or a salt thereof having a molecular weight of 3000 to 500000 in terms of viscosity-average molecular weight , said copolymer having in a molecule thereof 40 to 99.8 mol% of the repeating unit A represented by the general formula (I) 50 to O mol% of the repeating unit B represented by the general formula (II); and 60 to 0.2 mol% of the repeating unit D represented by the general formula (VIII)

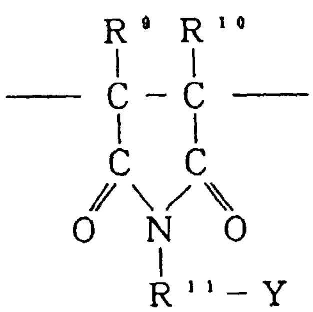 · · · (VIII)

Wherein $R^9$ to $R^{11}$ and Y are each as previously defined.

Moreover, the present invention provides the processes (a) to (f) and (m) as the process for producing the copolymer i or a salt thereof and also the processes (g) to (l) and (n) as the process for producing the copolymer ii or a salt thereof.

The process (a) is the process for producing the copolymer i or a salt thereof which comprises reacting a copolymer

having in a molecule thereof 20 to 99.8 mol% of the repeating unit A represented by the general formula (I); 50 to 0 mol% of the repeating unit B represented by the general formula (II); and 30 to 0.2 mol% of the repeating unit E represented by the general formula (IX)

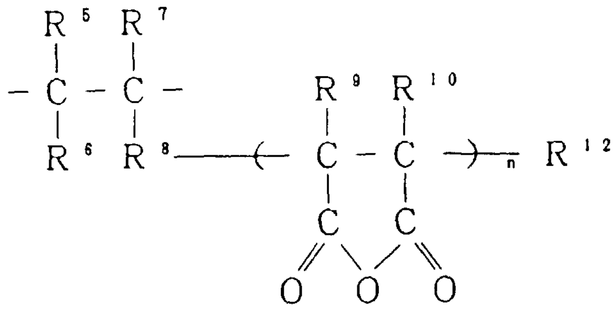

. . . (IX)

wherein $R^5$ to $R^{10}$, $R^{12}$ and n are each as previously defined, with a salt of a piperazine derivative represented by the general formula (X)

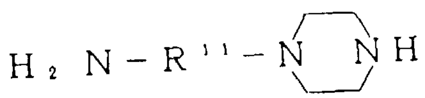

. . . (X)

wherein $R^{11}$ is as previously defined and thereafter, the resultant reaction product is brought into contact with a base to remove the acid.

The process (b) is the process for producing the copolymer i or a salt thereof which comprises reacting a copolymer having in a molecule thereof 20 to 99.8 mol% of the repeating unit A represented by the general formula (I); 50 to 0 mol% of the repeating unit B represented by the general formula (II); and 30 to 0.2 mol% of the repeating unit E represented by the general formula (IX) with a salt of a piperazine derivative represented by the general formula (X) in the presence of at least one formyl group-containing compound selected from formamide, formic acid and derivatives thereof and thereafter, the resultant reaction product is brought into contact with a base to remove the acid.

The process (c) is the process for producing the copolymer i which comprises reacting a copolymer having in a molecule thereof 20 to 99.8 mol% of the repeating unit A represented by the general formula (I); 50 to 0 mol% of the repeating unit B represented by the general formula (II); and 30 to 0.2 mol% of the repeating unit E represented by the general formula (IX) with a reaction product between a piperazine derivative represented by the general formula (X) and at least one formyl group-containing compound selected from formamide, formic acid and derivatives thereof.

The process (d) is the process for producing the copolymer i or a salt thereof which comprises reacting a copolymer having in a molecule thereof 20 to 99.8 mol% of the repeating unit A represented by the general formula (I); 50 to 0 mol% of the repeating unit B represented by the general formula (II); and 30 to 0.2 mol% of the repeating unit E represented by the general formula (IX) with a salt of a diamine represented by the general formula (XI)

$$H_2N - R^{11} - NH - R^{13} \qquad (XI)$$

wherein $R^{11}$ and $R^{13}$ are each as previously defined and thereafter, the resultant reaction product is brought into contact with a base to remove the acid.

The process (e) is the process for producing the copolymer i or a salt thereof which comprises reacting a copolymer having in a molecule thereof 20 to 99.8 mol% of the repeating unit A represented by the general formula (I); 50 to 0 mol% of the repeating unit B represented by the general formula (II); and 30 to 0.2 mol% of the repeating unit E represented by the general formula (IX) with a salt of a diamine represented by the general formula (XI) in the presence of at least one formyl group-containing compound selected from formamide, formic acid and derivatives thereof and thereafter, the resultant reaction product is brought into contact with a base to remove the acid.

The process (f) is the process for producing the copolymer i which comprises reacting a copolymer having in a molecule thereof 20 to 99.8 mol% of the repeating unit A represented by the general formula (I); 50 to 0 mol% of the

repeating unit B represented by the general formula (II) ; and 30 to 0.2 mol% of the repeating unit E represented by the general formula (IX) with a reaction product between a diamine represented by the general formula (IX) and at least one formyl group-containing compound selected from formamide, formic acid and derivatives thereof.

The process (g) is the process for producing the copolymer ii or a salt thereof which comprises reacting a copolymer having in a molecule thereof 40 to 99.8 mol% of the repeating unit A represented by the general formula (I); 50 to 0 mol% of the repeating unit B represented by the general formula (II); and 60 to 0.2 mol% of the repeating unit F represented by the general formula (XII)

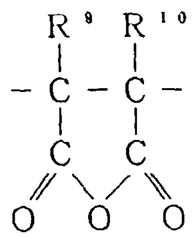

· · · (XII)

wherein $R^9$ and $R^{10}$ are each as previously defined, with a salt of a piperazine derivative represented by the general formula (X) and thereafter, the resultant reaction product is brought into contact with a base to remove the acid.

The process (h) is the process for producing the copolymer ii or a salt thereof which comprises reacting a copolymer having in a molecule thereof 40 to 99.8 mol% of the repeating unit A represented by the general formula (I); 50 to 0 mol% of the repeating unit B represented by the general formula (II); and 60 to 0.2 mol% of the repeating unit F represented by the general formula (XII) with a salt of a piperazine derivative represented by the general formula (X) in the presence of at least one formyl group-containing compound selected from formamide, formic acid and derivatives thereof and thereafter, the resultant reaction product is brought into contact with a base to remove the acid.

The process (i) is the process for producing the copolymer ii which comprises reacting a copolymer having in a molecule thereof 40 to 99.8 mol% of the repeating unit A represented by the general formula (I); 50 to 0 mol% of the repeating unit B represented by the general formula (II); and 60 to 0.2 mol% of the repeating unit F represented by the general formula (XII) with a reaction product between a piperazine derivative represented by the general formula (X) and at least one formyl group-containing compound selected from formamide, formic acid and derivatives thereof.

The process (j) is the process for producing the copolymer ii or a salt thereof which comprises reacting a copolymer having in a molecule thereof 40 to 99.8 mol% of the repeating unit A represented by the general formula (I); 50 to 0 mol% of the repeating unit B represented by the general formula (II); and 60 to 0.2 mol% of the repeating unit F represented by the general formula (XII) with a salt of a diamine represented by the general formula (XI) and thereafter, the resultant reaction product is brought into contact with a base to remove the acid.

The process (k) is the process for producing the copolymer ii or a salt thereof which comprises reacting a copolymer having in a molecule thereof 40 to 99.8 mol% of the repeating unit A represented by the general formula (I); 50 to 0 mol% of the repeating unit B represented by the general formula (II); and 60 to 0.2 mol% of the repeating unit F represented by the general formula (XII) with a salt of a diamine represented by the general formula (XI) in the presence of at least one formyl group-containing compound selected from formamide, formic acid and derivatives thereof and thereafter, the resultant reaction product is brought into contact with a base to remove the acid.

The process (1) is the process for producing the copolymer ii which comprises reacting a copolymer having in a molecule thereof 40 to 99.8 mol% of the repeating unit A represented by the general formula(I); 50 to O mol% of the repeating unit B represented by the general formula (II); and 60 to 0.2 mol% of the repeating unit F represented by the general formula (XII) with a reaction product between a diamine represented by the general formula (XI) and at least one formyl group-containing compound selected from formamide, formic acid and derivatives thereof.

The process (m) is the process for producing the copolymer (i) or the salt thereof having in a molecule thereof 20 to 99.8 mol% of the repeating unit A represented by the general formula (I); 50 to 0 mol% of the repeating unit B represented by the general formula (II); and 30 to 0.2 mol% of the repeating unit C represented by the general formula (III) wherein Y is represented by the general formula (IV) or (IV) which comprises hydrolyzing under acidic condition the copolymer having in a molecule thereof 20 to 99.8 mol% of the repeating unit A represented by the general formula (I); 50 to 0 mol% of the repeating unit B represented by the general formula (II); and 30 to 0.2 mol% of the repeating unit C represented by the general formula (III) wherein $R^1$ to $R^{13}$, Y and n are each as previously defined, provided that at least one of Y is represented by the general formula (V) or (VII) in the repeating unit C represented by the general formula (III).

The process (n) is the process for producing the copolymer (II) or the salt thereof having in a molecule thereof 40 to 99.8 mol% of the repeating unit A represented by the general formula (I); 50 to O mol% of the repeating unit B

represented by the general formula (II); and 60 to 0.2 mol% of the repeating unit D represented by the general formula (VIII) wherein Y is represented by the general formula (IV) or (VI) which comprises hydrolyzing under acidic condition the copolymer having in a molecule thereof 40 to 99.8 mol% of the repeating unit A represented by the general formula (I); 50 to O mol% of the repeating unit B represented by the general formula (II); and 60 to 0.2 mol% of the repeating unit D represented by the general formula (VIII) wherein $R^1$ to $R^{13}$, Y and n are each as previously defined, provided that at least one of Y is represented by the general formula (V) or (VII) in the repeating unit D represented by the general formula (VIII).

The copolymer (including a salt thereof, and the same shall apply to the following) of the present invention is a new, random, block or graft copolymer having the repeating unit A represented by the general formula (I), the repeating unit B represented by the general formula (II) and the repeating unit C represented by the general formula (III) or the repeating unit D represented by the general formula (VIII). The amino group Y contained in the repeating unit C or D (general formulae (IV) to (VII)) may be the same or different in each repeating unit.

As to the proportion of each of the repeating units based on the total amount of the repeating units A, B and C or D, in copolymer i, the proportion of the repeating unit A is 20 to 99.8 mol%, preferably 60 to 99.5 mol%, the proportion of the repeating unit B is 50 to O mol%, preferably 40 to 0 mol% and the proportion of the repeating unit C is 30 to 0.2 mol%, preferably 20 to 0.2 mol%. or the proportion of the repeating unit D is 60 to 0.2 mol%, preferably 20 to 0.2 mol%. In the case of the copolymer ii, the proportion of the repeating unit A is 40 to 99.8 mol%, preferably 45 to 99 mol%, the proportion of the repeating unit B is 50 to 0 mol%, preferably 40 to 0 mol% and the proportion of repeating unit D is 60 to 0.2 mol%, preferably 55 to 0.2 mol%.

A proportion of the repeating unit C (D) exceeding 30 (60) mol% results in a disadvantage of deteriorated mechanical properties of the copolymer obtained, whereas that less than 0.2 mol% leads to failure to sufficiently develop the characteristics of the copolymer having an amino group of the present invention.

The copolymer according to the present invention is constituted basically of the aforesaid repeating units A, B and C or D. However, copolymer i may have, to some extent, the repeating unit G represented by the general formula (XIII)

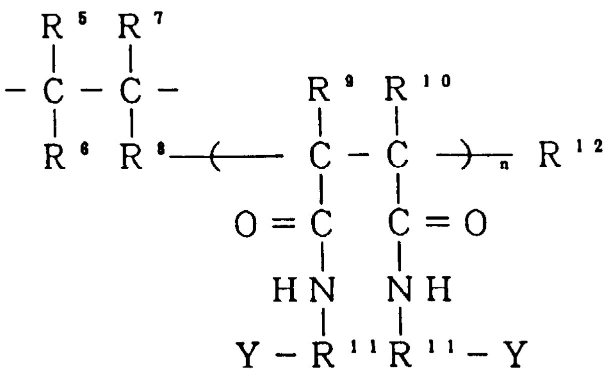

. . . (XIII)

wherein $R^5$ to $R^{12}$, Y and n are each as previously defined. Likewise, the copolymer ii may have, to some extent, the repeating unit H represented by the general formula (XIV)

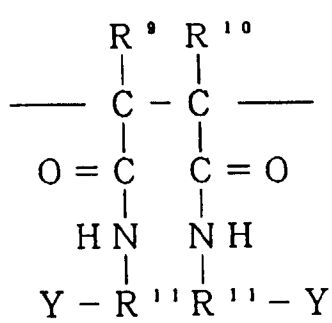

. . . (XIV)

wherein $R^9$ to $R^{11}$ and Y are each as previously defined.

The molecular weight of the copolymer of the present invention is 3,000 to 500,000 expressed in terms of viscosity-average molecular weight, which corresponds to the viscosity in the range of 10 to 50,000 mPa·s (10 to 50,000 cPs) of the 10% by weight of solution of the copolymer having an amino group in a proper solvent such as toluene, xylene,

cumene, tetralin, 1,3-dimethyl-2-imidazolidinone (DMI), dimethyl sulfoxide, acetone or methyl ethyl ketone.

In the general formula (I) which represents the repeating unit A, $R^1$ and $R^2$, independently of one another, that is, they may be the same or different in each repeating unit, are each a hydrogen atom, an alkyl group having 1 to 10, preferably 1 to 4 carbon atoms, a cycloalkyl group having 3 to 8, preferably 3 to 6 carbon atoms, an aryl group having 6 to 10, preferably 6 to 9 carbon atoms, an alkenyl group having 2 to 4 carbon atoms such as a vinyl group and allyl group, an alkoxy group having 1 to 4 carbon atoms, an alkoxycarbonyl group having 1 to 18, preferably 1 to 8 carbon atoms, an alkylcarboxyl group having 1 to 17, preferably 1 to 3 carbon atoms, an alkylcarbonyl group having 1 to 6, preferably 1 to 4 carbon atoms, an arylcarbonyl group having 6 to 8 carbon atoms, a halogen atom, preferably a chlorine or bromine atom, or a nitrile group. The general formula (I) includes the case where one repeating unit A is an ethylene unit ($R^1$ and $R^2$ are simultaneously hydrogen atoms) and the another is a propylene unit ($R^1$ is a hydrogen atom and $R^2$ is a methyl group).

In the general formula (II) which represents the repeating unit B, $R^3$ and $R^4$ , independently of one another, that is, they may be the same or different in each repeating unit as is case with the aforestated $R^1$ and $R^2$, are each a hydrogen atom, an alkyl group having 1 to 4 carbon atoms such as a methyl group or an ethyl group, an alkenyl group having 2 to 4 carbon atoms such as vinyl group or allyl group, or a halogen atom such as a chlorine atom or a bromine atom.

In the general formula (III) which represent the repeating units C, $R^5$ to $R^7$ are each the same as any of the aforestated $R^1$ and $R^2$; $R^8$ is absent, that is, means a bond only or denotes a methylene group or an ethylene group; $R^9$ and $R^{10}$, independently of one another, are each a hydrogen atom, an alkyl group having 1 to 6, preferably 1 to 2 carbon atoms or an aryl group having 6 to 8 carbon atoms; $R^{11}$ is an alkylene group having 1 to 18, preferably a straight-chain or branched chain alkylene group having 1 to 8 carbon atoms such as a group of methylene, ethylene, tetramethylene, hexamethylene or 2-methylpropylene, a cycloalkylene group having 5 to 17, preferably 6 to 10 carbon atoms such as a cyclohexylene group or a methylenecyclohexylmethylene group, an arylene group having 6 to 12 carbon atoms, preferably a phenylene group or an oxydiphenylene group, an arylalkylene group having 7 to 12, preferably 8 to 10 carbon atoms such as a xylylene group or a polyoxyalkylene group having 4 to 30, preferably 4 to 15 carbon atoms such as polyoxymethylene and polyoxypropylene; $R^{12}$ is a hydrogen atom or an alkyl group having 1 to 10, preferably 1 to 8 carbon atoms; and Y which is bonded to $R^{11}$ is at least one kind of amino group selected from the group represented by the general formulae (IV), (V), (VI), and (VII)

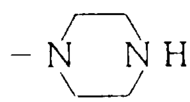 · · · (IV)

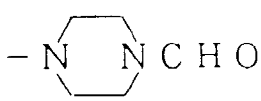 · · · (V)

-NH-$R^{13}$ (VI)

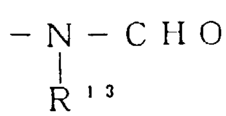 · · · (VII)

wherein $R^{13}$ in the general formulae (VI) and (VII) is an alkyl group having 1 to 6 carbon atoms, preferably a methyl group or an ethyl group.

In the above-mentioned formulae, $R^5$ to $R^{13}$ and Y may be each the same or different in each repeating unit as is the case with the aforestated $R^1$ and $R^2$ ; n is an integer from 1 to 10, preferably 1 to 3; and when n is plural, that is , 2 or more, $R^9$, $R^{10}$, $R^{11}$ $R^{13}$ and Y each being present in the number same as that of n may be each the same or different.

In the general formula (VIII) which represents the repeating unit D, $R^9$ , $R^{10}$, $R^{11}$, $R^{13}$ and Y are each as previously defined.

Various processes are available for the production of the copolymer having an amino group (copolymers i and ii)

according to the present invention without specific limitation, among which any of the above-mentioned processes (a) to (n) according to the present invention is capable of more efficiently producing the copolymer.

The starting copolymer having the repeating units A, B and E for the production of the copolymer i of the present invention is produced by subjecting the monomers giving the repeating units represented by the general formulae (I) and (II), respectively to radical polymerization or ionic polymerization by a known method and subsequently grafting the monomer giving the repeating unit represented by the general formula (IX) onto the resultant polmer by a known method.

The starting copolymer having the repeating units A, B and F for the production of the copolymer as the copolymer ii of the present invention is produced by subjecting the monomers giving the repeating units represented by the general formulae (I), (II) and (XII), respectively to radical polymerization or ionic polymerization by a known method.

A variety of monomers giving the repeating unit A represented by the general formula (I) are available and specifically exemplified by olefin such as ethylene, propylene, 1-butene, isobutylene and 1-octene; cyclic olefin such as cyclopentene, cyclohexene and cyclooctene; styrenic monomer (aromatic vinyl compound) such as styrene, $\alpha$-methylstyrene, vinyltoluene and p-tert-butylstyrene; vinyl ester such as vinyl acetate, vinyl butyrate and vinyl stearate; vinyl ether such as methylvinyl ether and ethylvinyl ether; halogeno-olefin such as vinyl chloride and vinylidene chloride; (meth)acrylate such as methyl (meth)acrylate, ethyl (meth)acrylate, butyl meth(acrylate), hexyl (meth)acrylate, cyclohexyl (meth)acrylate, decyl (meth)acrylate, octadecyl (meth)acrylate and methoxyethyl (meth)acrylate; nitrile such as acrylonitrile and methacrylonitrile and vinyl ketone such as methylvinyl ketone and phenylvinyl ketone. Each of them may be used alone or in combination with at least one of others.

Among them are preferable ethylene, propylene, styrene, methylvinyl ether, isobutylene, vinyl acetate and (meth) acrylate.

Specific examples of monomers giving the repeating unit B represented by the general formula (II) include conjugated dienes such as butadiene, isoprene and chloroprene. Each of them may be used. alone or in combination with at least one of others. Among them are preferable butadiene and isoprene.

The repeating unit E represented by the general formula (IX) can be formed by copolymerizing the monomer giving the repeating unit A with the monomer giving the repeating unit B through a known method and grafting onto the resultant copolymer, an unsaturated dicarboxylic anhydride such as maleic anhydride, methylmaleic anhydride, 1,2-dimethylmaleic anhydride, ethylmaleic anhydride, phenylmaleic anhydride and itaconic anhydride by the use of a known peroxide or a polymerization initiator. The preferable grafting monomer is maleic anhydride. The graft reaction proceeds by the bonding of a grafting monomer such as maleic anhydride with the repeating unit A or B. As the starting polymer having the repeating unit E to be used in the present invention, there may be employed the polymer available in the market as the polymer in which the unsaturated dicarboxylic anhydride is grafted such as maleic acid-modified EPR and maleic acid-modified SEBS.

The starting material having the repeating units A, B and E in the processes (a) to (f) of the present invention is exemplified by the copolymer obtained by grafting an unsaturated dicarboxylic anhyride such as maleic anhydride, methylmaleic anhydride, ethylmaleic anhydride and itaconic anhydride onto polyethylene, polypropylene, polyisoprene and hydrogenated product thereof, polybutadiene and hydrogenated product thereof, chloroprene rubber and hydrogenated product thereof, nitrile rubber and hydrogenated product thereof, ethylene/propylene copolymer, ethylene/(meth)acrylate copolymer, styrene/isoprene copolymer and hydrogenated product thereof, styrene/butadiene copolymer and hydrogenated product thereof, in which the copolymer may be any of random, block and alternating copolymers.

The starting material having the repeating units A, B and F in the processes (g) to (l) of the present invention is exemplified by but shall not be limited to styrene/maleic anhydride copolymer, ethylene/maleic anhydride copolymer propylene/maleic anhydride copolymer, ethylene/propylene/maleic anhydride copolymer, isobutylene/maleic anhydride copolymer, styrene/isoprene/maleic /maleic anhydride copolymer, ethylene/maleic anhydride/ethyl acrylate copolymer, ethylene/maleic anhydride/methyl acrylate copolymer, ethylene/vinyl acetate/maleic anhydride copolymer and styrene/ butadiene/maleic anhydride copolymer.

In the processes (a) and (g) of the present invention, a starting copolymer having the repeating units A, B and E or F is reacted with a salt of a piperazine derivative represented by the general formula (X) to imidize the copolymer, and the resultant reaction mixture is brought into contact with a base.

In the process (d) and (j) of the present invention, a starting copolymer having the repeating units A, B and E or F is reacted with a salt of a diamine represented by the general formula (XI) to imidize the copolymer, and the resultant reaction mixture is brought into contact with a base.

Specific examples of the piperazine derivative represented by the general formula (X) include N-aminoethylpiperazine; N-aminopropylpiperazine; N-aminobutylpiperazine; N-aminohexylpiperazine; N-aminooctylpiperazine and N-(4-amino-2,2-dimethylbutyl) piperazine; of which are preferable N-aminoethylpiperazine; N-aminopropylpiperazine; N-aminobutylpiperazine and N-aminohexylpiperazine.

Specific examples of the diamine represented by the general formula (XI) include N-lower alkyl-substituted straight-chain aliphatic diamine such as N-methylmethylenediamine; N-ethylmethylenediamine; N-propylmethylenediamine; N-butylmethylenediamine; N-methylethylenediamine; N-ethylethylenediamine; N-propylethylenediamine; N- butylethylenediamine; N-methyl-1,3-propanediamine; N-ethyl-1,3-propanediamine; N-propyl-1,3-propanediamine; N-butyl-1,3-propanediamine; N-methyl-1,4-butanediamine; N-ethyl-1,4-butanediamine; N-propyl-1,4-butanediamine; N-butane-1,4-butanediamine; N-methyl-1,6-hexanediamine; N-ethyl-1,6-hexanediamine; N-propyl-1,6-hexanediamine; N-butyl-1,6-hexanediamine; N-methyl-1,8-octanediamine; N-ethyl-1,8-octanediamine; N-methyl-1,12-dodecanediamine; N-ethyl-1,12-dodecanediamine; N-propyl-1,12-dodecanediamine; N-butyl-1,12-dodecanediamine; N-methyl-1, 18-octadecanediamine; N-ethyl-1,18-octadecanediamine; N-propyl-1,18-octadecanediamine; and N-butyl-1,18-octadecanediamine, N-lower alkyl-substituted branched aliphatic diamine such as N-methyl-2,2,5-trimethyl-1,6-hexanediamine; N-ethyl-2,2,5-trimethyl-1,6-hexanediamine; N-propyl-2,2,5-trimethyl-1,6-hexanediamine; and N-butyl-2,2,5-trimethyl-1,6-hexanediamine, N-lower alkyl-substituted alicyclic diamine such as N-methyl-isophoronediamine; N-ethyl-isophoronediamine; N-propyl-isophoronediamine; N-butylisophoronediamine; 1-N-methylaminomethyl-3-aminomethylcyclohexane; and 1-N-ethylaminomethyl-3-aminomethylcyclohexane, N-lower alkyl-substituted arylalkyldiamine such as N-methyl-m-xylylenediamine; N-ethyl-p-xylylenediamie; and N-methyl-p-xylylenediamine, N-lower alkyl-substituted aryldiamine such as N-methyl-p-phenylenediamine; N-ethyl-m-phenylenediamine; N-methyl-m-phenylenediamine; and N-ethyl-p-phenylenediamine, and N-lower alkyl-substituted polyoxyalkylenediamine such as N-methylpolyoxypropylenediamine; and N-ethylpolyoxyethylenediamine.

Among the above-mentioned examples are desirable N-lower alkyl-substituted aliphatic or alicyclic diamine, of which are particularly preferable N-methylethylenediamine, N-ethylethylenediamine; N-methyl-1,3-propanediamine; N-ethyl-1,3-propanediamine; N-methyl-1,4-butanediamine; N-ethyl-1,4-butanediamine; N-methyl-1,6-hexanediamine; and N-ethyl-1,6-hexanediamine.

The above-mentioned piperazine derivative and diamine may be in the original form or in the form of a salt (partially neutralized salt or a completely neutralized salt, but the use of the partially neutralized salt is preferable because of its higher reaction efficiency.

The aforesaid piperazine and diamine are each preferably used in the form of partially neutralized salt with an acid, which is preferably selected from those each having an acid strength higher than that of a carboxylic acid, and specifically enumerated by sulfuric acid; sulfonic acid such as benzenesulfonic acid, toluenesulfonic acid, and nathphalenesulfonic acid; halogeno-acid such as hydrochloric acid, hydrofluoric acid, hydrobromic acid and hydroiodic acid; nitric acid; boric acid and phosphoric acid. Among them are preferable hydrochloric acid and toluenesulfonic acid.

In producing a salt of the piperazine derivative or a salt of the diamine, the molar ratio of the piperazine derivative or diamine to the acid is selected so that the resultant salt has a degree of neutralization of 50 to 100% in terms of acid equivalent based on the total amino groups of the piperazine derivative or the diamine. A degree of neutralization thereof less than 50% results in inevitable crosslinkage or gelling at the time of imidization reaction, whereas that exceeding 100% leads to a long time required for imidization reaction, thus causing disadvantage from economical viewpoint. The preferable degree of neutralization is in the range of 50 to 80%.

A salt of the piperazine derivative or a salt of the diamine can be easily prepared by the neutralization reaction between the piperazine derivative or the diamine and the corresponding acid. There may be adopted a method in which the piperazine derivative or diamine is added dropwise to a solution of an acid in an alcohol and the resultant product is concentrated when necessary and recrystallized from an alcohol to isolate the partially neutralized salt to be used as the starting material. There may be also adopted a method in which the piperazine or the diamine and the corresponding acid are formed into the partially neutralized salt to be used for the reaction as such in the presence of an aprotic polar solvent such as 1,3-dimethyl-2-imidazolidinone (DMI); N-methyl-2-pyrrolidone; dimethyl sulfoxide (DMSO); dimethyl sulfone; dioxane; 1,2-dimethoxyethane; hexamethylenephosphoric triamide; and tetramethyl urea.

The imidization reaction can be carried out in molten state in the absence of a solvent by means of a screw extruder. For the purpose of preventing local reaction and uniformizing the reaction, however, an inert solvent is preferably employed. Examples of the usable solvent for the aforesaid purpose include aromatic hydrocarbons such as benzene, toluene, xylene, cumene, ethyltoluene, propyltoluene and diethylbenzene; alicyclic hydrocarbons such as methylcyclopentane, cyclohexane, ethylcyclopentane, methylcyclohexane, 1,1-dimethylcyclohexane and ethylcyclohexane; aliphatic hydrocarbons such as hexane, heptane, octane, decane, methylheptane, 3-ethylhexane and trimethylpentane; and aprotic polar solvents such as DMI, tetramethyl urea, dimethyl sulfone, dioxane, 1,2-dimethoxyethane, hexamethylenephosphoric triamide, DMSO and N-methyl-2-pyrrolidone.

In the process of the present invention, the reactive substrates that are each considerably different in polarity are reacted with each other, and therefore, it is preferable to simultaneously use a nonpolar solvent and a polar solvent.

The amount of the aforestated solvent to be used is not specifically limited but may be suitably selected according to the situation. It is determined in the range of 0.3 to 20 times, preferably one (1) to 10 times in weight based on the weight of the starting copolymer having the repeating units A, B and E or F to be used as a staring material, that is, the multifunctional copolymer having substituted or nonsubstituted succinic anhydride as the functional group. An amount thereof less than 0.3 times may result in insufficient dilution effect and highly viscous reaction mixture causing

difficulty in handling, whereas that exceeding 20 times will result in failure to develop the effect corresponding to the high usage causing disadvantage from the economical viewpoint.

In the imidization reaction according to the abovementioned processes, catalyst is not particularly required by, if used, it is preferably selected from the tertiary amines such as trimethylamine, triethylamine, tributylamine, N,N-dimethylaniline, N,N-diethylaniline and 1,8-diazabicyclo [5.4.0] undec-7-ene.

In the above-mentioned processes (a), (d), (g) and (j), the proportions of the starting copolymer, piperazine or salt thereof and diamine or salt thereof to be used vary depending on the kind of starting material and other conditions and can not be unequivocally determined. However, the ratio of the piperazine derivative or the diamine is usually 1.0 to 10 times, preferably 1.05 to 5.0 times expressed in terms of non-neutralized amino group or unreacted amino gorup, based on one (1) mol of the substituted or nonsubstittued succinic anhydride group, that is, the repeating unit E or F contained in the starting copolymer. A ratio thereof less than 1.0 unfavorably leads to the residual succinic anhydride group remaining non-imidized even after the end of the reaction and to the possibility of causing gelation by amide crosslinkage due to the reaction between the secondary amino group reproduced in the acid removal step and the aforesaid succinic anhydride group, whereby the effect of the present invention is unfavorably demolished. On the other hand, a ratio thereof exceeding 10 times results in the inevitable economic hardship in the excessively large amount of the reaction reagent required in spite of the advantage in high rate of imidization reaction.

The reaction temperature and reaction time in the aforesaid processs vary depending on the type of solvent to be used and whether or not a catalyst is present. The reaction temperature is usally in the range of 100 to 250°C, preferably 110 to 200°C with the reaction time of one (1) to 20 hours. A reaction temperature lower than 100°C disadvantageously causes a long reaction time required, whereas that higher than 250°C unfavorably leads to the possibility of coloration of the reaction product along with the thermal decomposition of the introduced amino group.

According to the process of the present invention, the imidization reaction takes place selectivity. A relatively low imidization reaction temperature or a low molar ratio of the reaction reagent to the starting material causes a higher formation rate of the repeating unit C or D and a lower formaiton rate of the repeating unit G or H to the substantially negligible level. When the reaction is carried out by the use of the aforestated catalyst or at a high temperature or a high molar ratio of the reaction reagent to the starting material, the formation ratio of the repeating unit G or H is increased, which however does not overturn the object of the present invention.

The composition of the copolymer of the present invention is analyzed, for example, by means of nuclear magnetic resonance spectrum analysis using a carbon isotope ($^{13}$C-NMR) and is specifically shown therein by peak intensity ratios of carbonyl carbon of imide ring emerging at the chemical shift of 176 to 180 ppm, approx. and carbonyl carbon of amide group emerging at the chemical shift of 172 to 174 ppm, approx.

The order of feeding raw material for reaction, etc. in the processes (a), (d), (g) and (j) is not specifically limited but may be selected in a wide variety of manners. In general, the salt in the form of powder or solution produced from the piperazine derivative or diamine and an acid is added to an aprotic polar solvent or an inert solvent to form a solution and thereafter, to the resultant solution is gradually added the copolymer having the repeating units A, B and E or F, and the reverse order may be adopted. The feeding during the step may be carried out under heating and reflux of a solvent.

The imidization reactions among the starting copolymer, a salt of the piperazine derivative or a salt of the diamine are accompanied by water formation during the progress thereof, thus forming an azeotropic mixture of the solvent and water. The reaction can be efficiently effected by discharging the azeotropic water outside the reaction system by means of a Dean-Stark water separator or the like.

The completion of the imidization reaction can be confirmed by that the azeotropic water formation is no longer observed or that the increase in the absorption capacity of the carbonyl group of the imide ring at around 1700 to 1800 $cm^{-1}$ is no longer observed in infrared (IR) spectrum analysis in which a sample is collected from the resultant reaction mixture.

In the reaction mixture thus obtained is contained a salt of the copolymer of the present invention having the secondary amino group that is bonded thereto via imide bond. The resultant salt can be converted to the free amine by a method wherein the reaction mixture as such or, when necessary, after being pulverized by pouring in a non-solvent such as methanol, isopropanol, isobutanol, hexane cr water, is brought into contact with an aqueous solution of a base or, if necessary, a mixed solution of a base in methanol/water for the acid removal. Specific examples of the above-mentioned base usable for the acid removal include a water-soluble base such as sodium hydroxide, potassium hydroxide, lithium hydroxide, sodium carbonate, potassium carbonate, sodium hydrogencarbonate, potassium hydrogencarbonate, ammonia, methylamine, ethylamine, trimethylamine and triethylamine. Among those are preferable sodium hydroxide, sodium carbonate and sodium hydrogencarbonate from the economic viewpoint.

In the processes (b) and (h) of the present invention, the starting copolymer having the repeating units A, B and E or F is reacted with a salt of the general formula (X) in the presence of at least one formyl group-containing compound selected from formamide, formic acid and derivatives thereof.

In the processes (c) and (i), the starting copolymer is reacted with the reaction product obtained in advance by

reacting the salt of the general formula (X) with at least one formyl group-containing compound selected from formamide, formic acid and derivatives thereof.

In the processes (e) and (k), the reaction is effected in the same manner as in the processes (b) and (h) except that a salt of a diamine represented by the general formula (XI) is used in place of the salt of the piperazine derivative represented by the general formula (X).

In the processes (f) and (l), the reaction is carried out in the same manner as in the process (c) and (i) except that a diamine represented by the general formula (XI) is employed in place of the salt of the piperazine derivative represented by the general formula (X).

The formyl group-containing compound includes formamide, formic acid and derivatives thereof and is available from the market. Examples of the formamide derivative include N-methylformamide, N-ethylformamide, N-butylformamide, N-dimethylformamide, N-diethylformamide, N-methylformanilide and N-ethylformanilide. Examples of the formic acid derivative include esters of formic acid such as methyl formate, ethyl formate, propyl formate, propyl formate and butyl formate and salts of formic acid such as sodium formate, potassium formate and ammonium formate. The formyl group-containing compound function not only as the solvent but also as a reaction reagent.

The piperazine derivative, diamine represented by the general formulae (X), (XI), respectively and derivatives thereof are same as those that are used in the processes (a), (d), (g) and (j), and can be prepared in the same manner as in the processes (a), (d), (g) and (j). It is preferably in the operation that the salt be formed in a formyl group-containing compound and used as such for the reaction because of its high efficiency.

In the processes (c), (f) (i) and (l) it is necessary to prepare in advance the reaction product between a piperazine derivative or diamine and a formyl group-containing compound prior to the imidization of the starting copolymer.

The reaction reagent to be used in the process is prepared by subjecting the piperazine derivative or the diamine in an amount of at least equimol, preferably 1.5 to 5 times of mols based on one (1) mol of the formyl group-containing compound to amidization or amide interchange reaction at a temperation of 60 to 180°C, preferably 80 to 150°C for 2 to 5 hours. In the aforesaid reaction by the use of the formyl group-containing compound, it is preferable to distil away water, an alcohol, and ammonia or amine in the case of using formic acid, an ester of formic acid and a formamide, respectively.

The reaction product thus obtained may be employed as such as the imidization reagent. However since the reaction mixture ususally contains unreacted piperazine derivative or unreacted diamine, the use of which as such in the subsequent imidization reaction causes crosslinkage or gelling, it is preferably to distil away the unreacted piperazine derivative or the unreacted diamine by heating the reaction mixture under reduced pressure or in the case of a high-boiling piperazine derivative or a high-boiling diamine to once neutralize the reaction mixture with hydrochloric acid or the like and remove the dihydrochloride of the piperazine derivative or the diamine by recrystallization.

As described above, in the processes (b), (c), (e), (f), (h) and (i), the imidization reaction proceeds by reacting the copolymer having the repeating units A, B and E or F with a salt of a piperazine derivative represented by the general formula (X) or a salt of a diamine represented by the general formula (XI) and a formyl group-containing compound or with the reaction product of between a piperazine derivative or a diamine and a formyl group-containing compound.

The imidization reaction can be carried out in molten state in the absence of a solvent by means of a screw extruder. For the purpose of preventing local reaction and uniforming the reaction, however, an inert solvent is preferably employed. Examples of the solvent for the aforesaid purpose are same as those to be used in the processes (a), (d), (g) and (j).

In the processes (b), (c), (e), (f), (h), (i), (k) and (l), the reactive substrates that are each considerably different in polarity are reacted with each other as is the case with the process (a), it is preferably to simultaneously employ a nonpolar solvent and a polar solvent.

The amount of the solvent to be used is not specifically limited but may be suitably selected according to the situation ususally in the same manner as in the process (a).

The ratio by weight of the inert solvent to the formyl group-containing compound as the reaction reagent is not specifcally limited but usually 40/60 to 100/0, preferably 50/50 to 95/5. The ratio 100/0 applies to the processes (c), (f), (i) and (l).

In the case of the processes (c), (f), (i) and (l) in which is used, as the substrate for imidization reaction the reaction product between the piperazine derivative or the diamine and the formyl group-containing compound, it is not necessary to use a formyl group-containing compound as the solvent. In the case of the others (processes (b), (e), (h) and (k)), however, the aforesaid compound is indispensably used not as the solvent but as the reaction reagent in the form of a mixed solvent with an inert solvent for dilution. The proportion of the aforesaid compound to be used is preferably increased in accordance with the proportion of the functional group of the starting material with a view to improving the solubility of the substrate and enhancing the rate of reaction.

In the imidization reaction in the processes (b), (c), (e), (f), (h), (i), (k) and (l), catalyst is not particularly required but, a tertiary amine such as trimethylamine is preferably used as is the case with the process (a).

In the above-mentioned processes (b), (c), (e), (f), (h), (i), (k) and (l) the proportions of the starting copolymer,

piperazine or salt thereof and diamine or salt thereof to be used vary depending on the kind of starting material and other conditions and can not be unequivocally determined. However, as is the case with the process (a), the ratio of the piperazine derivative or the diamine is usually 1.0 to 10 times, preferably 1.05 to 5.0 times expressed in terms of non-neutralized amino group or unreacted amino group, based on one (1) mol of the substitued or nonsubstituted succinic anhydride group, that is, the repeating unit E or F contained in the starting copolymer. A ratio thereof less than 1.0 unfavorably leads to the residual succinic anhydride group remaining non-imidized even after the end of the reaction and in the processes (b), (e), (h) and (k) to the possibility of causing gelation by amide crosslinkage due to the reaction between the secondary amino group reproduced in the acid removal step and the aforesaid succinic anhydride group, whereby the effect of the present invention is unfavorably demolished. On the other hand, a ratio thereof exceeding 10 times results in the inevitable economic hardship in the excessively large amount of the reaction reagent required in spite of the advantage in high rate of imidization reaction.

Similarly to the process (a), the reaction temperature and reaction time in the aforesaid processes vary depending on the type of solvent to be used and whether or not a catalyst is present. The reaction temperature is usually in the range of 100 to 250°C, preferably 110 to 200°C with the reaction time of one (1) to 20 hours. A reaction temperature lower than 100°C disadvantageously causes a long reaction time required, whereas that higher than 250°C unfavorably leads to the possibility of coloration of the reaction product along with the thermal decomposition of the introduced formamide group.

By the same reason as in the process (a), the object of the present invention is not overturned by the relationship between the reaction conditions and the formation ratio of the repeating unit G or H, and the increase in the formation ratio of G or H.

With regard to the effect of the ratio of the formamide group to the secondary amino group, the use of the reaction product between the piperazine derivative or diamine and the formyl group-containing compound as the reaction reagent (process (c), (f), (i) and (l)) results in a copolymer having substantially 100% formamide group. In the case where the imidization reaction is carried out by the use of a salt of the piperazine derivative or a salt of the diamine in the presence of the formyl group-containing compound (processes (b), (e), (h) and (K)), there is obtained a copolymer having both formamide group and amino group mingled therein. The formation ratio of the formamide group increases with increase in the imidization reaction temperature and also increase with the reaction time.

Thus, under the above-mentioned reaction conditions in the process (b), (c), (e), (f), (h), (i), (k) and (l), there is obtained the copolymer having a (repeating unit C or D/repeating unit G or H) ratio of 100/0 to 30/70 along with a (formamide group/secondary amino group) ratio of 100/0 to 30/70.

The composition of the copolymer obtained by the process (b), (c), (e), (f), (h), (i), (k) and (l) is analyzed in the same manner as in process (a), for example, by means of nuclear magnetic resonance spectrum analysis using a carbon isotope ($^{13}C$-NMR) and is specifically shown therein by peak intensity ratios of carbonyl carbon of imide ring emerging at the chemical shift of 176 to 180 ppm, approx., carbonyl carbon of amide group emerging at the chemical shift of 172 to 174 ppm, approx. and carbonyl carbon of formamide group emerging at the chemical shift of 162 ppm, approx.

The order of feeding raw materials for reaction, etc. in the processes (b), (e), (h) and (k) is not specifically limited but may be selected in a wide variety of manners. In general, the salt in the form of powder or solution produced from the piperazine derivative or diamine and an acid is added to a formyl group-containing compound or a solution thereof in another solvent to form a solution and thereafter, to the resultant solution is gradually added the copolymer having the repeating units A, B and E or F; and the reverse order may be adopted. The feeding during the step may be carried out under heating and reflux of a solvent.

Likewise, the order of feeding raw materials for reaction, etc. in the processes (c), (f), (i) and (l) is not specifically limited but may be selected in a wide variety of manners. In general, the starting copolymer having the repeating units A, B and E or F is dissolved in a solvent, and to the resultant homogeneous solution is gradually added the reaction product between the piperazine derivative or the diamine and the formyl group-containing compound, and the reverse order may be adopted. The feeding during the step may be carried out under heating and reflux of a solvent.

Since the imidization reactions in the processes (b), (c), (e) (f), (h), (i), (k) and (l) is accompanied by water formation during the progress thereof, the azeotropic water is preferably discharged outside the reaction system in the same manner as in the process (a). The completion of the imidization reaction can be confirmed in the same manner as in the process (a) as well.

The acid removal in the processes (b), (e), (h) and (k) can be carried out in analogy with the process (a) and that in the processes (c), (f), (i) and (l) is unnecessary because of the absence of copolymer salt.

The copolymer having the formamide group only without the amino group can easily be purified by pouring the resultant reaction mixture in a non-solvent such as methanol, isopropanol, isobutanol, hexane or water as mentioned before and recovering the resultant precipitate by pulverizing into powdery product.

The copolymer having formamide group in the copolymers i or ii can be utilized for various applications as such or after the conversion of the formamide group into secondary amino group.

The method of converting the formamide group in the copolymer i or ii into the corresponding secondary amino group is not specifically limited but may be selected from known methods including for example, the method in which the copolymer having formamide group is dissolved in a suitable solvent, the method in which the copolymer treated in dispersed state with an aqueous solution of a mineral acid such as hydrochloric acid and hydrofluoric acid and the method in which the copolymer is hydrolyzed preferably under acidic condition such as the methods (m) and (n). The acidic condition is not specifically limited but is preferably the condition in which the pH is 3 or less and is used a mineral acid such as hydrochloric acid and sulfuric acid.

The secondary amine salt thus obtained can be put in the free secondary amine if required in a similar manner as above.

It is assumed in the present invention that by the use of a partially neutralized salt of the piperazine derivative or the diamine as the imidization reagent in the presence or absence of the formyl group-containing compound or the use of the formamide that is the reaction product between the piperazine derivative or the diamine or the formyl group-containing compound also as the imidization reagent, the strongly basic secondary amine in the piperazine derivative or the diamine forms a salt or formamide and, as the result, the reactivity of one terminal thereof is suppressed and the primary amine at the other terminal thereof selectively participates in the imidization reaction, therebly enabling the smooth production of the objective copolymer without causing crosslinkage.

Here, the fact that formamide group is contained in the reaction product even when a partially neutralized salt of the piperazine derivative or the diamine is used in the presence of the formyl group-containing compound (processes (b), (e), (h) and (k)) is presumed to be attributable to that the aforestated partially neutralized salt causes amide interchange reaction with the formyl group-containing compound which is used as the solvent during the reaction.

In addition, the formamide group formed by the use of the formyl group-containing compound functions as the protective group of the secondary amine and prevents side reactions even at the time of imidization reaction under heating, thus enabling the production of the copolymer having favorable hue.

When the copolymer having formamide group is obtained as the amino group-containing copolymer according to the present invention, the formamide group is transformable to amino group as required and besides, to a more active functional group by means of thermal decomposition when the copolymer thus obtained is used as polymer compatibilizer, resin modifier or the like.

The present invention enables a secondary amino group such as an alkylpiperazino group or having a formamide group which is to be introduced into the side chains of various high molecular compounds via imide groups and can provide a novel copolymer utilizable in a wide diversity of applications as high molecular amino reagents, raw materials for functional high molecular compounds, raw materials for adhesives, polymer compatibilizers, resin modifiers and so forth and in addition thereto, another novel copolymer having a secondary amino group obtained through the hydrolisis of the formamide group introduced in the above manner.

In the following, the present invention will be described in more detail with reference to the reference examples, working examples (simplified as "examples"), comparative examples and practical examples, any of which however, shall not be construed to limit the present invention thereto.

Reference Example 1

Preparation of partially neutralized salt of N-(2-aminoethyl)piperazine with p-toluenesulfonic acid ---

A 1 liter flask-equipped with a thermometer, a stirrer, a dropping funnel and a reflux condenser was charged with 300 ml of methanol and 95 g (0.5 mol) of p-toluenesulfonic acid monohydrate to prepare a solution. To the resultant solution was added dropwise a solution of 323 g (2.5 mols) of N-(2-aminoethyl)piperazine in 300 ml of methanol, while cooling the solution on an ice bath at such a rate that the temperature of the mixed solution was maintained at 10 to 20°C. After the completion of the dropwise addition, the mixed solution was heated to 70°C and then distilled at reduced pressure to distil away the methanol and unreacted N-(2-aminoethyl)piperazine and deposit 170.2 g of a white solid. The white solid thus obtained was taken out from the flask, slurried with 300 ml of toluene, filtered and further washed twice with 100 ml each of toluene to obtain white powders, which were dried under reduced pressure. The dried white powders obtained at a yield of 142.9 g were titrated with 0.5 N hydrochloric acid (HCl) by the use of bromophenol blue as the indicator to determine the neutralization equivalent and the degree of neutralization. The results are given in Table 1.

Reference Example 2

Preparation of partially neutralized salt of N-(2-aminoethyl)piperazine with hydrochloric acid ---

The procedure in Reference Example 1 was repeated by the use of the same flask as that used therein as the

reaction vessel except that 35% aqueous solution of hydrogen chloride (35% hydrochloric acid) was employed in place of p-toluenesulfonic acid to prepare white powders of N-(2-aminoethyl)piperazine monohydrochloride. The neutralization equivalent and the degree of neutralization for the monohydrochloride were determined in the same manner as in Reference Example 1. The results are given in Table 1.

Reference Example 3

Preparation of partially neutralized salt of N-(6-aminohexyl)piperazine with p-toluenesulfonic acid ---

By the use of the same flask as that used in Reference Example 1 as the reaction vessel, 95 g (0.5 mol) of p-toluenesulfonic acid monohydrate was dissolved in 500 ml of 1,3-dimethyl-2-imidazolidinone (DMI) at room temperature. To the resultant solution was gradually added 83.3 g (0.45 mol) of N-(6-aminohexyl)piperazine to dissolve it and prepare a solution of partially neutralized salt of N-(6-aminohexyl)piperazine with p-toluenesulfonic acid in DMI so that the resultant solution temperature might not exceed 20°C. The neutralization equivalent and the degree of neutralization based on the solid content of the resultant partially neutralized salt are given in Table 1.

Reference Examples 4 and 5

The procedure in Reference Example 3 was repeated except that different piperazine derivatives and acids were employed to prepare a salt each of the piperazine derivatives with the acids. The neutralization equivalent and the degree of neutralization based on the solid content of the resultant salts are given Table 1.

Reference Example 6

Preparation of partially neutralized salt of N-(3-aminopropyl) piperazine with p-toluenesulfonic acid----

By the use of the same flask as that used in Reference Example 1 as the reaction vessel, 95 g (0.5 mol) of p-toluenesulfonic acid monohydrate was dissolved in 500 ml of dimethylformamide (DMF) at room temperature. To the resultant solution was gradually added 64.5 g (0.45 mol) of N-(3-aminopropyl) piperazine to dissolve it and prepare a solution of partially neutralized salt of N-(3-aminopropyl) piperazine with p-toluenesulfonic acid in DMF so that the resultant solution temperature might not exceed 20°C. The neutralization equivalent and the degree of neutralization for the resultant salt are given in Table 1.

Reference Example 7

Preparation of partially neutralized salt of N-(6-aminohexyl) piperazine with p-toluenesulfonic acid----

Substantially the procedure in Reference Example 6 was repeated to prepare a solution of salt of N-(6-aminohexyl) piperazine with p-toluenesulfonic acid in DMF. The neutralization equivalent and the degree of neutralization for the resultant salt are given in Table 1.

Reference Example 8

Preparation of a reaction product between N-(2-aminoethyl) piperazine and formamide----

By the use of the same flask as that used in Reference Example 1 as the reaction vessel, 45 g (1.0 mol) of formamide was gradually added dropwise to 646 g (5.0 mol) of N-(2-aminoethyl) piperazine at room temperature and then the mixture was heated at 80 to 120°C to react it for 9 hours during which time the evolution of ammonia gas was observed. After the completion of the reaction, the unreacted N-(2-aminoethyl) piperazine was distilled away to obtain a residue. The reaction product thus obtained was subjected to the determination by means of the potentiometric titration, and the results are given in Table 2.

Reference Example 9

Preparation of a reaction product between N-(2-aminoethyl) piperazine and formic acid----

258 g (2.0 mol) of N-(2-aminoethyl) piperazine and 23 g (0.5 mol) of formic acid were reacted one another at 120°C for 10 hours in a Dean-Stark water separator while water was distilled away. After the completion of the reaction, the

unreacted N-(2-aminoethyl) piperazine was distilled away to obtain a residue. The reaction product thus obtained was subjected to the determination by means of the potentiometric titration, and the results are given in Table 2.

Reference Example 10

Preparation of a reaction product between N-(2-aminoethyl) piperazine and DMF----

By the use of the same flask as that used in Reference Example 1 as the reaction vessel, 73 g (1.0 mol) of DMF was gradually added dropwise to 646 g (5.0 mol) of N-(2-aminoethyl) piperazine and then the mixture was heated at 80 to 120°C to react it for 9 hours during which time the evolution of dimethylamine was observed. After the completion of the reaction, the unreacted N-(2-aminoethyl) piperazine was distilled away to obtain a residue. The reaction product thus obtained was subjected to the determination by means of the potentiometric titration, and the results are given in Table 2.

Reference Example 11

Preparation of a reaction product between N-(3-aminopropyl) piperazine and DMF----

Substantially the procedure in Reference Example 8 was repeated to gradually add DMF dropwise to N-(3-aminopropyl) piperazine and react them at room temperature. The resultant reaction mixture was dissolved in a solvent (ethanol/water=7/3 (ratio by volume)). The solution was neutralized with a 35% hydrochloric acid, concentrated, recrystallized and filtered to remove a crystal of N-(3-aminopropyl) piperazine hydrochloride. The concentrated residue thus obtained was subjected to the determination by means of the potentiometric titration, and the results are given in Table 2.

Reference Example 12

Preparation of a reaction product between N-(3-aminopropyl) piperazine and formamide----

Substantially the procedure in Reference Example 8 was repeated to gradually add formamide dropwise to N-(3-aminopropyl) piperazine and react them at room temperature. The reaction product thus obtained was treated in the same way as in Reference Example 11 to obtain a desired reaction product. The desired reaction product was subjected to the determination by means of the potentiometric titration, and the results are given in Table 2.

Reference Example 13

Preparation of a reaction product Detween N-(3-aminopropyl) piperazine and formic acid----

Substantially the procedure in Reference Example 9 was repeated to gradually add formic acid dropwise to N-(3-aminopropyl) piperazine and react them at room temperature. The reaction product thus obtained was treated in the same way as in Reference Example 11 to obtain a desired reaction product. The desired reaction product was subjected to the determination by means of the potentiometric titration, and the results are given in Table 2.

Reference Example 14

Preparation of a reaction product between N-(4-aminobutyl) piperazine and DMF----

Substantially the procedure in Reference Example 8 was repeated to gradually add DMF dropwise to N-(4-aminobutyl) piperazine and react them at room temperature. The reaction product thus obtained was treated in the same way as in Reference Example 11 to obtain a desired reaction product. The desired reaction product was subjected to the determination by means of the potentiometric titration, and the results are given in Table 2.

Reference Example 15

Preparation of a reaction product between N-(6-aminohexyl) piperazine and formamide----

Substantially the procedure in Reference Example 8 was repeated to gradually add formamide dropwise to N-(6-aminohexyl) piperazine and react them at room temperature. The reaction product thus obtained was treated in the

same way as in Reference Example 11 to obtain a desired reaction product. The desired reaction product was subjected to the determination by means of the potentiometric titration, and the results are given in Table 2.

Table 1

| No. | Piperazine derivatives | Acids | Solvents |
|---|---|---|---|
| Reference Example 1 | N-(2-aminoethyl)piperazine | p-Toluenesulfonic acid | None |
| Reference Example 2 | N-(2-aminoethyl)piperazine | Hydrochloric acid | None |
| Reference Example 3 | N-(6-aminohexyl)piperazine | p-Toluenesulfonic acid | DMI |
| Reference Example 4 | N-(3-aminopropyl)piperazine | p-Toluenesulfonic acid | DMI |
| Reference Example 5 | N-(4-aminobutyl)piperazine | p-Toluenesulfonic acid | DMI |
| Reference Example 6 | N-(3-aminopropyl)piperazine | p-Toluenesulfonic acid | DMF |
| Reference Example 7 | N-(6-aminohexyl)piperazine | p-Toluenesulfonic acid | DMF |

Table 1 (continued)

| No. | Concentration of salt solids (%) | Neutralization equivalent (meq/g) | Degree of neutralization (%) |
|---|---|---|---|
| Reference Example 1 | 100 | 3.22 | 51.0 |
| Reference Example 2 | 100 | 5.82 | 51.5 |
| Reference Example 3 | 24.4 | 2.40 | 55.1 |
| Reference Example 4 | 20.0 | 2.58 | 56.5 |
| Reference Example 5 | 25.0 | 2.73 | 53.5 |
| Reference Example 6 | 20.0 | 2.58 | 56.5 |
| Reference Example 7 | 24.4 | 2.40 | 55.1 |

Table 2

| No. | Piperazine derivatives | Formyl group-containing compounds | Neutralization equivalent (meq/g) |
|---|---|---|---|
| Reference Example 8 | N-(2-aminoethyl)piperazine | Formamide | 6.41 |
| Reference Example 9 | N-(2-aminoethyl)piperazine | Formic acid | 6.36 |
| Reference Example 10 | N-(2-aminoethyl)piperazine | DMF | 6.31 |
| Reference Example 11 | N-(3-aminopropyl)piperazine | DMF | 5.95 |
| Reference Example 12 | N-(3-aminopropyl)piperazine | Formamide | 5.79 |
| Reference Example 13 | N-(3-aminopropyl)piperazine | Formic acid | 5.84 |
| Reference Example 14 | N-(4-aminobutyl)piperazine | DMF | 5.20 |
| Reference Example 15 | N-(6-aminohexyl)piperazine | Formamide | 4.58 |

Reference Example 16

Preparation of partially neutralized salt of N-ethylethylenediamine with p-toluenesulfonic acid ---

A 1 liter flask equipped with a thermometer, a stirrer, a dropping funnel and a reflux condenser was charged with 300 ml of methanol and 95 g (0.5 mol) of p-toluenesulfonic acid monohydrate to prepare a solution. To the resultant

solution was added dropwise a solution of 220 g (2.5 mols) of N-ethylethylenediamine in 300 ml of methanol while cooling the solution on an ice bath at such a rate that the temperature of the mixed solution was maintained at 10 to 20°C. After the completion of the dropwise addition, the mixed solution was heated to 70°C and then distilled at reduced pressure to distil away the methanol and unreacted N-ethylethylenediamine and deposit 140.3 g of a white solid. The white solid thus obtained was taken out from the flask, slurried with 300 ml of toluene, filtered and further washed twice with 100 ml each of toluene to obtain white powders, which were dried under reduced pressure. The dried white powders obtained at a yield of 124.8 g were titrated with 0.5 N hydrochloric acid (HCl) by the use of bromophenol blue as the indicator to determine the neutralization equivalent and the degree of neutralization. The results are given in Table 3.

Reference Example 17

Preparation of partially neutralized salt of N-ethylethylenediamine with hydrochloric acid ---

The procedure in Reference Example 16 was repeated by the use of the same flask as that used therein as the reaction vessel except that 35% aqueous solution of hydrogen chloride (35% hydrochloric acid) was employed in place of p-toluenesulfonic acid to prepare white powders of N-ethylethylenediamine monohydrochloride. The neutralization equivalent and the degree of neutralization for the monohydrochloride were determined in the same manner as in Reference Example 16. The results are given in Table 3.

Reference Example 18

Preparation of partially neutralized salt of N-methyl-1,6-hexanediamine with p-toluenesulfonic acid ---

By the use of the same flask as that used in Reference Example 16 as the reaction vessel, 95 g (0.5 mol) of p-toluenesulfonic acid monohydrate was dissolved in 500 ml of 1,3-dimethyl-2-imidazolidinone (DMI) at room temperature. To the resultant solution was gradually added 58.5 g (0.45 mol) of N-methyl-1,6-hexanediamine to dissolve it and prepare a solution of partially neutralized salt of N-methyl-1,6-hexanediamine with p-toluenesulfonic acid in DMI so that the resultant solution temperature might not exceed 20°C. The neutralization equivalent and the degree of neutralization based on the solid content of the resultant partially neutralized salt are given in Table 3.

Reference Examples 19 and 20

The procedure in Reference Example 18 was repeated except that different diamines and acids were employed to prepare a salt each of the diamines with the acids. The neutralization equivalent and the degree of neutralization based on the solid content of the salts thus obtained are given in Table 3.

Reference Example 21

Preparation of partially neutralized salt of N-methyl-1,6-hexanediamine with p-toluenesulfonic acid----

By the use of the same flask as that used in Reference Example 16 as the reaction vessel, 95 g (0.5 mol) of p-toluenesulfonic acid monohydrate was dissolved in 500 ml of dimethylformamide (DMF) at room temperature. To the resultant solution was gradually added 58.5 g (0.45 mol) of N-methyl-1,6-hexanediamine to dissolve it and prepare a solution of partially neutralized salt of N-methyl-1,6-hexanediamine with p-toluenesulfonic acid in DMF so that the resultant solution temperature might not exceed 20°C. The neutralization equivalent and the degree of neutralization for the salt thus obtained are given in Table 3.

Reference Example 22

Preparation of partially neutralized salt of N-methyl-1,3-diaminopropane with p-toluenesulfonic acid----

Substantially the procedure in Reference Example 21 was repeated to prepare a solution of salt of N-methyl-1,3-diaminopropane with p-toluenesulfonic acid in DMF. The neutralization equivalent and the degree of neutralization for the salt thus obtained are given in Table 3.

Table 3

| No. | Diamines | Acids | Solvents used |
|---|---|---|---|
| Reference Example 16 | N-Ethylethylenediamine | p-Toluenesulfonic acid | None |
| Reference Example 17 | N-Ethylethylenediamine | Hydrochloric acid | None |
| Reference Example 18 | N-Methyl-1,6-hexanediamine | p-Toluenesulfonic acid | DMI |
| Reference Example 19 | N-Methyl-1,3-propanediamine | p-Toluenesulfonic acid | DMI |
| Reference Example 20 | N-Ethyl-1,4-butanediamine | p-Toluenesulfonic acid | DMI |
| Reference Example 21 | N-Methyl-1,6-hexanediamine | p-Toluenesulfonic acid | DMF |
| Reference Example 22 | N-Methyl-1,3-propanediamine | p-Toluenesulfonic acid | DMF |

Table 3 (continued)

| No. | Concentration of salt solids (%) | Neutralization equivalent (meq/g) | Degree of neutralization (%) |
|---|---|---|---|
| Reference Example 16 | 100 | 3.73 | 50.9 |
| Reference Example 17 | 100 | 7.74 | 51.4 |
| Reference Example 18 | 25.1 | 2.91 | 54.0 |
| Reference Example 19 | 20.0 | 3.08 | 56.5 |
| Reference Example 20 | 24.9 | 3.16 | 52.9 |
| Reference Example 21 | 22.5 | 2.85 | 55.0 |
| Reference Example 22 | 21.0 | 3.15 | 55.5 |

Reference Example 23

Preparation of a reaction product between N-ehtylethylenediamine and formamide----

By the use of the same flask as that used in Reference Example 16 as the reaction vessel, 45 g (1.0 mol) of formamide was gradually added dropwise to 440 g (5.0 mol) of N-ethylethylenediamine at room temperature and then the mixture was heated at 80 to 120°C to react it for 9 hours during which time the evolution of ammonia gas was observed. After the completion of the reaction, the unreacted N-ethylethylenediamine was distilled away to obtain a

residue. The reaction product thus obtained was subjected to the determination by means of the potentiometric titration, and the results are given in Table 4.

Reference Example 24

Preparation of a reaction product between N-ethylethylenediamine and formic acid----

176 g (2.0 mol) of N-ethylethylenediamine and 23 g (0.5 mol) of formic acid were reacted one another at 120°C for 10 hours in a Dean-Stark water separator while water was distilled away. After the completion of the reaction, the unreacted N-ethylethylenediamine was distilled away to obtain a residue. The reaction product thus obtained was subjected to the determination by means of the potentiometric titration, and the results are given in Table 4.

Reference Example 25

Preparation of a reaction product between N-ethylethylenediamine and DMF----

By the use of the same flask as that used in Reference Example 16 as the reaction vessel, 77 g (1.0 mol) of DMF was gradually added dropwise to 440 g (5.0 mol) of N-ethylethylenediamine at room temperature and then the mixture was heated at 80 to 120°C to react it for 9 hours, during which time the evolution of N,N-dimethylamine was observed. After the completion of the reaction, the unreacted N-ethylethylenediamine was distilled away to obtained a residue. The reaction product thus obtained was subjected to the determination by means of the potentiometric titration, and the results are given in Table 4.

Reference Example 26

Preparation of a reaction product between N-methyl-1,3-propanediamine and DMF----

Substantially the procedure in Reference Example 23 was repeated to gradually add DMF dropwise to N-methyl-1,3-propanediamine and react them at room temperature. The resultant reaction mixture was dissolved in a solvent (ethanol/water=7/3 (ratio by volume)) and the resultant solution was neutralized with a 35% hydrochloric acid, then concentrated, recrystallized and filtered to remove a crystal of N-methyl-1,3-propanediamine hydrochloride. The concentrated residue thus obtained was subjected to the determination by means of the potentiometric titration, and the results are given in Table 4.

Reference Example 27

Preparation of a reaction product between N-methyl-1,3-propanediamine and formamide----

Substantially the procedure in Reference Example 23 was repeated to gradually add formamide dropwise to N-methyl-1,3-propanediamine and react them at room temperature. The reaction product thus obtained was treated in the same way as in Reference Example 26 to obtain a desired reaction product. The desired reaction product was subjected to the determination by means of the potentiometric titration, and the results are given in Table 4.

Reference Example 28

Preparation of a reaction product between N-methyl-1,3-propanediamine and formic acid----

Substantially the procedure in Reference Example 24 was repeated to gradually add formic acid dropwise to N-methyl-1,3-propanediamine and react them at room temperature. The reaction product thus obtained was treated in the same way as in Reference Example 26 to obtain a desired reaction product. The desired reaction product was subjected to the determination by means of the potentiometric titration, and the results are given in Table 4.

Reference Example 29

Preparation of a reaction product between N-ethyl-1,4-butanediamine and DMF----

Substantially the procedure in Reference Example 23 was repeated to gradually add DMF dropwise to N-ethyl-1,4-butanediamine and react them at room temperature. The reaction product thus obtained was treated in the same

way as in Reference Example 26 to obtain a desired reaction product. The desired reaction product was subjected to the determination by means of the potentiometric titration, and the results are given in Table 4.

Reference Example 30

Preparation of a reaction product between N-methyl-1,6-hexanediamine and formamide----

Substantially the procedure in Reference Example 23 was repeated to gradually add formamide dropwise to N-methyl-1,6-hexanediamine and react them at room temperature. The reaction product thus obtained was treated in the same way as in Reference Example 26 to obtain a desired reaction product. The desired reaction product was subjected to the determination by means of the potentiometric titration, and the results are given in Table 4.

Table 4

| No. | Diamines | Formyl group-containing compounds | Neutralization equivalent (meq/g) |
|---|---|---|---|
| Reference Example 23 | N-Ethylethylenediamine | Formamide | 8.59 |
| Reference Example 24 | N-Ethylethylenediamine | Formic acid | 8.64 |
| Reference Example 25 | N-Ethylethylenediamine | DMF | 8.62 |
| Reference Example 26 | N-Methyl-1,3-propanediamine | DMF | 8.54 |
| Reference Example 27 | N-Methyl-1,3-propanediamine | Formamide | 8.62 |
| Reference Example 28 | N-Methyl-1,3-propanediamine | Formic acid | 8.58 |
| Reference Example 29 | N-Ethyl-1,4-butanediamine | DMF | 6.92 |
| Reference Example 30 | N-Methyl-1,6-hexanediamine | Formamide | 6.31 |

Reference Example 31

Preparation of maleic anhydride-grafted polypropylene : Refer to Japanese Patent Application Publication No. 9925/1981 ---

100 parts by weight of powdery crystalline polypropylene having a weight-average molecular weight (Mw) of 60,000 with a number-average molecular weight (Mn) of 24000, 12 parts by weight of maleic anhydride and 4 parts by weight of dicumyl peroxide were preliminarily blended with each other and subjected to extrusion reaction with an extruder having a screw diameter of 30 mm and an aspect ratio (ratio of screw length to screw width) of 28 at a barrel temperature

set at 230°C and a number of screw revolutions of 60 rpm. The resultant grafted product thus discharge from the extruder was ground, immersed in acetone to remove unreacted maleic anhydride by extraction and dried to afford maleic anhydride-grafted polypropylene resin (1) with a grafted amount by maleic anhydride of 4.5% by weight. The resin thus obtained had an Mw of 15000 with an Mn of 6500 expressed in terms of polystyrene as determined by gel permeation chromatography (GPC).

Reference Example 32

In the same manner as in Reference Example 31, maleic anhydride-grafted copolymers (2) to (10) were obtained as given in Table 5.

Table 5

| Number of copolymers | Copolymer materials<br>Kind | Amount of grafted maleic anhydride (wt%) |
|---|---|---|
| (2) | An ethylene-propylene copolymer (Weight ratio 7/3, Mw=90000, Mn=41000) | 0.5 |
| (3) | An ethylene-ethyl acrylate copolymer (Weight ratio 7/3, Mw=40000, Mn=15000) | 8.1 |
| (4) | A hydrogenated product of a styrene-butadiene copolymer (Weight ratio 2/8, Mw=42000, Mn=41000) | 1.0 |
| (5) | A polyolefin elastomer (supplied by Exxon, VA1801) | 0.7 |
| (6) | A hydrogenated product of a styrene-isoprene copolymer (Weight ratio 3/7, Mw=41000, Mn=18200) | 3.1 |
| (7) | Polyethylene (Mw=5000, Mn=2200) | 20.0 |
| (8) | Polybutadiene (Mw=30000, Mn=14000) | 3.7 |
| (9) | A chloroprene rubber (Mw=30000, Mn=13000) | 2.7 |
| (10) | A nitrile rubber (Mw=34000, Mn=15000) | 1.8 |

Reference Example 33

By the use of the publicly known method, maleic anhydride copolymers (11) to (18) were obtained as given in Table 6.

Table 6

| Number of copolymers | Monomer Composition | | | | | |
|---|---|---|---|---|---|---|
| | Monomer(A) | | Monomer(B) | | Monomer(C) | |
| | Kind | mol% | Kind | mol% | Kind | mol% |
| (11) | Styrene | 95 | Maleic anhydride | 5 | - | - |
| (12) | Styrene | 75 | Maleic anhydride | 25 | - | - |
| (13) | Ethylene | 90 | Ethyl acrylate | 5 | Maleic anhydride | 5 |
| (14) | Ethylene | 88 | Ethyl acrylate | 10 | Maleic anhydride | 2 |
| (15) | Isobutylene | 50 | Maleic anhydride | 50 | - | - |
| (16) | Styrene | 48 | Butadiene | 50 | Maleic anhydride | 2 |
| (17) | Ethylene | 95 | Vinyl acetate | 4.5 | Maleic anhydride | 0.5 |
| (18) | Methyl vinyl ether | 50 | Maleic anhydride | 50 | - | - |

Table 6 (continued)

| Number of copolymers | Molecular weight | |
|---|---|---|
| | Mw | Mn |
| (11) | 52000 | 25000 |
| (12) | 12000 | 5000 |
| (13) | 30000 | 13000 |
| (14) | 50000 | 20000 |
| (15) | 9000 | 4100 |
| (16) | 100000 | 40000 |
| (17) | 40000 | 18000 |
| (18) | 8000 | 3900 |

Example 1

A 1 liter flask equipped with a thermometer, a stirrer, a dropping funnel and a Dean-Stark water separator was charged with 60 ml of xylene and 120 g of the maleic anhydride-grafted polypropylene as prepared in Reference

Example 31, which was dissolved in the xylene with heating under the reflux thereof at 140°C.

Then, to the resultant solution was gradually added dropwise a solution of 18.8 g of the N-(2-aminoethyl)piperazine p-toluenesulfonate as prepared in Reference Example 1 in 200 ml of DMI over a period of 3 hours, while the mixed reaction solution was maintained at the reflux temperature of xylene and the azeotropic water resulting from imidization reaction was discharged outside the reaction system by means of the Dean-Stark water separator.

After 17 hours of reaction from the initiation of the dropwise addition of the above-mentioned N-(2-aminoethyl) piperazine p-toluenesulfonate solution, the mixed reaction solution was cooled and poured into 5 liters of methanol to recover the purified product as precipitate.

A part of the precipitate thus obtained was dissolved in toluene under heating and made into cast films, which were subjected to infrared (IR) spectrum analysis. As a result, the absorption based on p-toluenesulfonic acid was observed at 1122 $cm^{-1}$, 1035 $cm^{-1}$, 1010 $cm^{-1}$, 685 $cm^{-1}$ and 570 $cm^{-1}$ in addition to the absorption based on imide ring at 1775 $cm^{-1}$ and 1704 $cm^{-1}$. Thus it was confirmed that N-ethylpiperazino groups had been bonded to polypropylene via imide bond in the form of p-toluenesulfonic acid.

Another part of the precipitate was immersed in a water/methanol solution (1:1 by volume) containing 8.0 g of potassium carbonate overnight, filtered, thoroughly washed with water and methanol and dried to afford a copolymer at a yield of 124.6 g.

The copolymer thus obtained was soluble in toluene and xylene each under heating. A solution of the copolymer in xylene was made into cast films, which were subjected to IR spectrum analysis. As a result, the above-mentioned absorption based on p-toluenesulfonic acid at 1122 $cm^{-1}$, 1035 $cm^{-1}$, 1010 $cm^{-1}$, 685 $cm^{-1}$ and 570 $cm^{-1}$ had disappeared. Instead, there were observed the absorption based on the amino groups of piperazine at 3290 $cm^{-1}$ and the absorption based on the imide rings at 1775 $cm^{-1}$ and 1704 $cm^{-1}$.

Aside from the above, the copolymer was subjected to nuclear magnetic resonance specturm analysis in $CDCl_3$ (heavy chloroform) using a carbon isotope ($^{13}C$-NMR). As a result, a peak assigned to the carbonyl carbons of imide rings emerged at 176 to 180 ppm but there did not emerge a peak indicating the existense of the carbonyl carbons of amide groups at 172 to 174 ppm.

The copolymer thus obtained according to the present invention was dissolved in tetralin at 100°C into a 10% by weight of solution thereof, which was measured for viscosity by the use of a Brookfield type viscometer at the same temperature or 100°C. As a result the viscosity was 145 cps.

Example 2

A 1 liter flask equipped with a thermometer, a stirrer, a dropping funnel and a Dean-Stark water separator was charged with 200 ml of DMI and 102.7 g of a solution of N-(3-aminopropyl)piperazine p-toluenesulfonate in DMI as prepared in Reference Example 4 in DMI, which was dissolved in the DMI with heating to 80°C.

Then, to the resultant solution was gradually added dropwise a solution of 100 g of the styrene/maleic anhydride (95 : 5 molar ratio) copolymer (Mw=52000, Mn=25000) as prepared in Reference Example 33 in 400 ml of toluene.

After the completion of the dropwise addition, a sample was taken from the mixed reaction product and subjected to infrared (IR) spectrum analysis. As a result, the absorption based on the anhydride ring at 1780 $cm^{-1}$ had completely disappeared.

Heating for temperature raising of the mixed reaction product was continued to boil water at around 140°C as the azeotrope with the refluxed xylene, and the boiled water was condensed and separated with the Dean-Stark water separator. The reaction was further continued at 140°C for 14 hours until the completion thereof where the azeotropic water formation was no longer observed. Subsequently the mixed reaction product was poured into 5 liters of methanol to recover the product as precipitate.

A part of the precipitate thus obtained was dissolved in toluene and made into cast films, which were subjected to infrared (IR) spectrum analysis. As a result, the absorption based on p-toluenesulfonic acid was observed at 1100 $cm^{-1}$, and 580 $cm^{-1}$ in addition to the absorption based on imide ring at 1775 $cm^{-1}$ and 1695 $cm^{-1}$. Thus it was confirmed that N-propylpiperazino groups had been bonded to polystyrene via imide bond in the form of p-toluenesulfonic acid.

Another part of the precipitate was immersed in a water/methanol solution (1:1 by volume) containing 8.0 g of potassium carbonate overnight, filtered, thoroughly washed with water and methanol and dried to afford a copolymer at a yield of 103.9 g.

The copolymer thus obtained was soluble in toluene and xylene each under heating. A solution of the copolymer in xylene was made into cast films, which were subjected to IR spectrum analysis. As a result, the above-mentioned absorption based on p-toluenesulfonic acid at 1100 $cm^{-1}$ and 580 $cm^{-1}$ had disappeared. Instead, there were observed the absorption based on the amino groups of piperazine at 3290 $cm^{-1}$ and the absorption based on the imide rings at 1775 $cm^{-1}$ and 1695 $cm^{-1}$.

Aside from the above, the copolymer was subjected to nuclear magnetic resonance spectrum analysis in $CDCl_3$ using a carbon isotope ($^{13}C$-NMR). As a result, a peak assigned to the carbonyl carbons of imide rings emerged at

176 to 180 ppm but there did not emerge a peak indicating the existense of the carbonyl carbons of amide groups at 172 to 174 ppm.

The copolymer thus obtained according to the present invention was dissolved in xylene at 25°C into a 10% by weight of solution thereof, which was measured for viscosity by the use of a Brookfield type viscometer at the same temperature or 25°C. As a result the viscosity was 720 cPs.

Examples 3 to 18

The procedure in Example 1 or 2 was repeated except that there were used the piperazine derivative salts as obtained in Reference Examples 1 to 5 and the copolymers as obtained in Reference Examples 32 and 33 as the starting copolymers. The result obtained are given in Table 7. Measurements were made of the viscosities of the copolymers thus obtained in the same manner as in Example 2, which results are given in Table 7.

Table 7

| No. | Starting copolymers: Kind | Starting copolymers: Amount(g) | Salts of piperazine derivative: Kind | Salts of piperazine derivative: Amount(g) |
|---|---|---|---|---|
| Example 3 | A maleic acid modified-product of an ethylene-propylene copolymer(2) | 100 | A N-(4-aminobutyl)piperazine · p-toluenesulfonate (Reference Example 5) | 2.8 |
| Example 4 | A maleic acid modified-product of an ethylene-ethylacrylate copolymer(3) | 100 | A N-(6-aminohexyl)piperazine · p-toluenesulfonate (Reference Example 3) | 68.9 |
| Example 5 | A maleic acid modified-product of an styrene-butadiene copolymer(4) | 100 | A N-(2-aminoethyl)piperazine · hydrochloride (Reference Example 2) | 1.4 |
| Example 6 | A maleic acid modified-product of an polyolefin elastomer(5) | 100 | A N-(3-aminopropyl)piperazine · p-toluenesulfonate (Reference Example 4) | 3.3 |
| Example 7 | A maleic product of a hydrogenated styrene-isoprene copolymer(6) | 100 | A N-(2-aminoethyl)piperazine · p-toluenesulfonate (Reference Example 1) | 11.8 |
| Example 8 | A styrene-maleic anhydride (75/25) copolymer(12) | 90 | A N-(2-aminoethyl)piperazine · hydrochloride (Reference Example 2) | 75.4 |
| Example 9 | An ethylene-ethyl acrylate-maleic anhydride (90/5/5) copolymer(13) | 100 | A N-(6-aminohexyl)piperazine · p-toluenesulfonate (Reference Example 3) | 64.2 |
| Example 10 | An ethylene-ethyl acrylate-maleic anhydride (88/10/2) copolymer(14) | 100 | A N-(3-aminopropyl)piperazine · p-toluenesulfonate (Reference Example 4) | 22.8 |

Table 7 (continued①)

| No. | Starting copolymers: Kind | Starting copolymers: Amount(g) | Salts of piperazine derivative: Kind | Salts of piperazine derivative: Amount(g) |
|---|---|---|---|---|
| Example 11 | A maleic acid modified-product of a polyethylene(7) | 100 | A N-(2-aminoethyl)piperazine · hydrochloride (Reference Example 2) | 38.5 |
| Example 12 | A maleic acid modified-product of a polybutadiene(8) | 100 | A N-(3-aminopropyl)piperazine · p-toluenesulfonate (Reference Example 4) | 17.6 |
| Example 13 | A maleic acid modified-product of a chloroprene rubber(9) | 100 | A N-(3-aminopropyl)piperazine · p-toluenesulfonate (Reference Example 4) | 12.8 |
| Example 14 | A maleic acid modified-product of a nitrile rubber(10) | 100 | A N-(3-aminopropyl)piperazine · p-toluenesulfonate (Reference Example 4) | 8.6 |
| Example 15 | An isobutylene-maleic anhydride (50/50) copolymer(15) | 80 | A N-(2-aminoethyl)piperazine · hydrochloride (Reference Example 2) | 93.1 |
| Example 16 | A styrene-butadiene-maleic anhydride copolymer(16) | 100 | A N-(3-aminopropyl)piperazine · p-toluenesulfonate (Reference Example 4) | 13.3 |
| Example 17 | An ethylene-vinyl acetate-maleic anhydride(95/4.5/0.5) copolymer(17) | 100 | A N-(3-aminopropyl)piperazine · p-toluenesulfonate (Reference Example 4) | 5.7 |
| Example 18 | A methyl vinyl ether-maleic anhydride(50/50) copolymer(18) | 80 | A N-(2-aminoethyl)piperazine · hydrochloride (Reference Example 2) | 93.0 |

Table 7 (continued②)

| No. | Reaction solvents | | | |
|---|---|---|---|---|
| | Solvents I | | Solvents II | |
| | Kind | amount(ml) | Kind | amount(ml) |
| Example 3 | DMI | 30 | Xylene | 500 |
| Example 4 | DMI | 200 | Cumene | 400 |
| Example 5 | DMI | 20 | Xylene | 500 |
| Example 6 | DMI | 30 | Xylene | 500 |
| Example 7 | DMI | 100 | Xylene | 400 |
| Example 8 | DMI | 200 | Cumene | 400 |
| Example 9 | DMI | 200 | Xylene | 400 |
| Example 10 | DMI | 100 | Xylene | 400 |
| Example 11 | DMSO | 150 | Xylene | 400 |
| Example 12 | DMI | 150 | Xylene | 400 |
| Example 13 | DMI | 100 | Xylene | 500 |
| Example 14 | DMI | 100 | Xylene | 500 |
| Example 15 | DMSO | 500 | Xylene | 200 |
| Example 16 | DMI | 150 | Xylene | 400 |
| Example 17 | DMI | 100 | Xylene | 500 |
| Example 18 | DMI | 500 | Xylene | 200 |

Table 7 (continued③)

| No. | Reaction conditions | | Yields |
|---|---|---|---|
| | Temperature (℃) | Hours (Hr) | (g) |
| Example 3 | 140 | 10 | 100.5 |
| Example 4 | 153 | 12 | 110.4 |
| Example 5 | 140 | 6 | 100.2 |
| Example 6 | 140 | 4 | 100.1 |
| Example 7 | 140 | 7 | 102.5 |
| Example 8 | 153 | 9 | 110.9 |
| Example 9 | 140 | 12 | 119.6 |
| Example 10 | 140 | 9 | 104.6 |
| Example 11 | 140 | 10 | 118.9 |
| Example 12 | 140 | 4 | 102.6 |
| Example 13 | 140 | 3 | 102.1 |
| Example 14 | 140 | 4 | 100.8 |
| Example 15 | 140 | 8 | 131.6 |
| Example 16 | 140 | 5 | 101.1 |
| Example 17 | 140 | 6 | 100.1 |
| Example 18 | 140 | 9 | 130.1 |

Table 7(continued ④)

| No. | Viscosity of copolymers: Solvents used | Viscosity of copolymers: Viscosity(cps) | Infrared spectrum ($cm^{-1}$) |
|---|---|---|---|
| Example 3 | Xylene | 1050 | 3285 Amino group(trace)<br>1772 Imide ring<br>1700 Imide ring |
| Example 4 | Xylene | 560 | 3280 Amino group<br>1772 Imide ring<br>1698 Imide ring<br>1660 (shoulder):Amide group |
| Example 5 | Xylene | 690 | 3290 Amino group<br>1780 Imide ring<br>1705 Imide ring |
| Example 6 | Xylene | 2230 | 3280 Amino group(trace)<br>1775 Imide ring<br>1698 Imide ring |
| Example 7 | Xylene | 580 | 3288 Amino group<br>1773 Imide ring<br>1700 Imide ring |

Table 7(continued ⑤)

| No. | Viscosity of copolymers | | Infrared spectrum |
|---|---|---|---|
| | Solvents used | Viscosity(cps) | ($cm^{-1}$) |
| Example 8 | Xylene | 150 | 3285 Amino group<br>1785 Imide ring<br>1706 Imide ring<br>1670 (shoulder):Amide group |
| Example 9 | Xylene | 510 | 3290 Amino group<br>1770 Imide ring<br>1695 Imide ring |
| Example 10 | Xylene | 750 | 3295 Amino group<br>1780 Imide ring<br>1700 Imide ring |
| Example 11 | Tetralin /DMI *1 | 38 | 3285 Amino group<br>1785 Imide ring<br>1702 Imide ring |
| Example 12 | Xylene | 450 | 3290 Amino group<br>1770 Imide ring<br>1689 Imide ring |

*1 (50/50/vol/vol)

Table 7(continued ⑥)

| No. | $^{13}C$-NMRspectrum (Intensity ratio) | | Ratio of functional groups |
|---|---|---|---|
| | W*2 | Y*3 | Repeating unit C or D/repeating unit G or H |
| Example 3 | 2.00 | Not detected | 100/0 |
| Example 4 | 2.00 | 0.105 | 95/5 |
| Example 5 | 2.00 | Not detected | 100/0 |
| Example 6 | 2.00 | Not detected | 100/0 |
| Example 7 | 2.00 | Not detected | 100/0 |
| Example 8 | 2.00 | 0.198 | 91/9 |
| Example 9 | 2.00 | Not detected | 100/0 |
| Example 10 | 2.00 | Not detected | 100/0 |
| Example 11 | 2.00 | Not detected | 100/0 |
| Example 12 | 2.00 | Not detected | 100/0 |

*2 ··· 176~180ppm
*3 ··· 172~174ppm

Table 7(continued ⑦)

| No. | Viscosity of copolymers | | Infrared spectrum |
|---|---|---|---|
| | Solvents used | Viscosity(cps) | ($cm^{-1}$) |
| Example 13 | Xylene | 410 | 3280 Amino group<br>1790 Imide ring<br>1700 Imide ring |
| Example 14 | Xylene | 480 | 3285 Amino group<br>1780 Imide ring<br>1702 Imide ring |
| Example 15 | DMI | 72 | 3290 Amino group<br>1775 Imide ring<br>1700 Imide ring |
| Example 16 | Xylene | 2100 | 3288 Amino group<br>1772 Imide ring<br>1698 Imide ring |
| Example 17 | Xylene | 870 | 3295 Amino group<br>1775 Imide ring<br>1703 Imide ring |
| Example 18 | DMI | 95 | 3280 Amino group<br>1780 Imide ring<br>1705 Imide ring |

Table 7 (continued ⑧)

| No. | $^{13}C$-NMRspectrum (Intensity ratio) | | Ratio of functional groups |
|---|---|---|---|
| | W*2 | Y*3 | Repeating unit C or D/repeating unit G or H |
| Example 13 | 2.00 | Not detected | 100/0 |
| Example 14 | 2.00 | Not detected | 100/0 |
| Example 15 | 2.00 | Not detected | 100/0 |
| Example 16 | 2.00 | Not detected | 100/0 |
| Example 17 | 2.00 | Not detected | 100/0 |
| Example 18 | 2.00 | Not detected | 100/0 |

Example 19

A 1 liter flask equipped with a thermometer, a stirrer, a dropping funnel and a Dean-Stark water separator was charged with 300 ml of DMF and 120 g of the maleic anhydride-grafted polypropylene as prepared in Reference Example 31, which was dissolved in the DMF with heating under the reflux at 140°C.

Then, to the resultant solution was gradually added dropwise a solution of 12.0 g of the reaction product of N-(2-aminoethyl)piperazine with formamide as prepared in Reference Example 8 in 200 ml of DMF over a period of 3 hours, while the mixed reaction solution was maintained at the reflux temperature of xylene and the azeotropic water resulting from imidization reaction was discharge outside the reaction system by means of the Dean-Stark water separator.

The reaction was further continued at 140°C for 1 hours until the completion thereof where the azeotropic water

formation was no longer observed. Subsequently the mixed reaction product was poured into 5 liters of methanol to recover the product as precipitate, which was washed with methanol and dried giving a yield of 126.4 g.

The resultant copolymer was in the form of white powder, soluble in xylene and dissolved in xylene into 10% by weight of the solution in xylene to measure the viscosity at 25°C by means of a Brookfield type viscometer. The result was 140 mPa·s (140 cPs)

A solution of the copolymer in xylene was made into cast films, which were subjected to IR spectrum analysis. As a result, the absorption based on formamide was observed at 1662 $cm^{-1}$ (shoulder) and 1531 $cm^{-1}$ in addition to the absorption based on imide ring at 1775 $cm^{-1}$ and 1704 $cm^{-1}$, but there was not observed the absorption based on amino group.

Aside from the above, the copolymer was subjected to nuclear magnetic resonance spectrum analysis in $CDCl_3$ using a carbon isotope ($^{13}C$-NMR). As a result, there emerged a peak assigned to the carbonyl carbons of imide rings at 176 to 180 ppm at an intensity ratio of 2.00, and a peak indicating the existense of the carbonyl carbons of formamide at 162 ppm at an intensity ratio of 1.00, but a peak indicating the existence of the carbonyl carbons of amide groups at 172 to 174 ppm did not emerge.

As the result of the above-mentioned analysis by $^{13}C$-NMR, the functional group ratio in molar ratio was determined to be repeating unit C/repeating unit G=100/0 and formamide group/secondary amino group=100/0.

Example 20

A 1 liter flask equipped with a thermometer, a stirrer, a dropping funnel and a Dean-Stark water separator was charged with 80 ml of DMF and 8 g of the reaction product of N-(3-aminopropyl)piperazine and DMF as prepared in Reference Example 11, which was dissolved in the DMF with heating to 80°C.

Then, to the resultant solution was gradually added dropwise a solution of 71 g of the styrene/maleic anhydride (95:5 molar ratio) copolymer (Mw=52000, Mn=25000) as prepared in Reference Example 33 in 350 ml of xylene.

After the completion of the dropwise addition, a sample was taken from the mixed reaction product and subjected to infrared (IR) spectrum analysis. As a result, the absorption based on the anhydride ring at 1780 $cm^{-1}$ had completely disappeared.

Heating for temperature raising of the mixed reaction product was continued to boil water at around 140°C as the azeotrope with the refluxed xylene, and the boiled water was condensed and separated with the Dean-Stark water separator. The reaction was further continued at 140°C for 9 hours until the completion thereof where the azeotropic water formation was no longer observed. Subsequently the mixed reaction product was poured into 5 liters of methanol to recover the product as precipitate, which was sufficiently washed with methanol and dried affording a yield of 73.4 g.

The resultant copolymer was in the form of white powder, soluble in toluene and dissolved in toluene into 10% by weight of the solution in toluene to measure the viscosity at 25°C by means of a Brookfield type viscometer. The result was 700 cPs.

A solution of the copolymer in toluene was made into cast films, which were subjected to IR spectrum analysis. As a result, the absorption based on formamide was observed at 1665 $cm^{-1}$ (shoulder) and 1532 $cm^{-1}$ in addition to the absorption based on imide ring at 1775 $cm^{-1}$ and 1695 $cm^{-1}$, but there was not observed the absorption based on amino group.

Aside from the above, the copolymer was subjected to nuclear magnetic resonance spectrum analysis in $CDCl_3$ using a carbon isotope ($^{13}C$-NMR). As a result, there emerged a peak assigned to the carbonyl carbons of imide rings at 176 to 180 ppm at an intensity ratio of 2.00, and a peak indicating the existence of the carbonyl carbons of formamide at 162 ppm at an intensity ratio of 1.00, but a peak indicating the existence of carbonyl carbons of amide groups at 172 to 174 ppm did not emerge. As the result of the above-mentioned analysis by $^{13}C$-NMR, the functional group ratio in molar ratio was determined to be repeating unit D/repeating unit H=100/0 and formamide group/secondary amino group=100/0.

Examples 21 to 36

The procedure in Example 19 or 20 was repeated except that there were employed the products as obtained in Reference Examples 1, 2 and 6 to 15 as the piperazine derivative salt or the reaction product of a piperazine derivative with a formyl group-containing compound; and the copolymers as described in Reference Examples 31 to 33 as the starting copolymer. However, in Examples 22, 25, 26 and 28, the mixed imidization reaction product was poured in methanol to recover the precipitate, which was immersed in a water/methanol solution (1: 1 by volume) containing 8.0 g of potassium carbonate overnight, filtered, thoroughly washed with water and methanol, dried and calcined. The results obtained are given in Table 8.

Measurements were made also of the viscosities of the copolymers thus obtained, which results are given in Table 8.

Table 8

| No. | Starting copolymers: Kind | Starting copolymers: Amount (g) | Salts of piperazine derivative or reaction products between piperazine derivative and formyl group-containing compound: Kind | Salts of piperazine derivative or reaction products between piperazine derivative and formyl group-containing compound: Amount (g) |
|---|---|---|---|---|
| Example 21 | A maleic acid modified-product of an ethylene-propylene copolymer(2) | 120 | A reaction product between N-(4-aminobutyl)piperazine and DMF (Reference Example 14) | 1.59 |
| Example 22 | A maleic acid modified-product of an ethylene-ethyl acrylate copolymer(3) | 80 | N-(6-aminohexyl)piperazine · p-toluenesulfonate (Reference Example 7) | 47.2 |
| Example 23 | A maleic acid modified-product of a styrene-butadiene copolymer(4) | 60 | A reaction product between N-(2-aminoethyl)piperazine and formamide (Reference Example 8) | 1.4 |
| Example 24 | A maleic acid modified-product of a polyolefin elastomer(5) | 120 | A reaction product between N-(3-aminopropyl)piperazine and DMF (Reference Example 11) | 2.1 |
| Example 25 | A maleic acid modified-product of hydrogenated styrene-isoprene copolymer(6) | 100 | N-(2-aminoethyl)piperazine · p-toluenesulfonate (Reference Example 1) | 13.4 |
| Example 26 | A styrene-maleic anhydride (75/25) copolymer(12) | 70 | N-(2-aminoethyl)piperazine · hydrochloride (Reference Example 2) | 39.6 |
| Example 27 | An ethylene-ethyl acrylate-maleic anhydride (90/5/5) copolymer(13) | 71 | A reaction product between N-(6-aminohexyl)piperazine and formamide (Reference Example 15) | 29.7 |
| Example 28 | An ethylene-ethyl acrylate-maleic anhydride (88/10/2) copolymer(14) | 100 | N-(2-aminopropyl)piperazine · p-toluenesulfonate (Reference Example 6) | 24.9 |

Table 8(coutinued ①)

| No. | Starting copolymers | | Salts of piperazine derivative or reaction products between piperazine derivative and formyl group-containing compound | |
|---|---|---|---|---|
| | Kind | Amount(g) | Kind | Amount(g) |
| Example 29 | A maleic acid modified-product of a polyethylene(7) | 100 | A reaction product between N-(2-aminoethyl)piperazine and formic acid (Reference Example 9) | 44.9 |
| Example 30 | A maleic acid modified-product of a polybutadiene(8) | 100 | A reaction product between N-(3-aminopropyl)piperazine and DMF (Reference Example 11) | 9.1 |
| Example 31 | A maleic acid modified-product of a chloroprene rubber(9) | 100 | A reaction product between N-(3-aminopropyl)piperazine and formamide (Reference Example 12) | 6.6 |
| Example 32 | A maleic acid modified-product of a nitrile rubber(10) | 100 | A reaction product between N-(3-aminopropyl)piperazine and formamide (Reference Example 12) | 4.4 |
| Example 33 | A isobutylene-maleic anhydride (50/50) copolymer(15) | 100 | A reaction product between N-(2-aminoethyl)piperazine and formamide (Reference Example 8) | 141.9 |
| Example 34 | A styrene-butadiene-maleic anhydrid copolymer(16) | 100 | A reaction product between N-(3-aminopropyl)piperazine and DMF (Reference Example 11) | 6.85 |
| Example 35 | An ethylene-vinyl acetate-maleic anhydride (90/4.5/0.5) copolymer(17) | 100 | A reaction product between N-(3-aminopropyl)piperazine and formic acid(Reference Example 13) | 3.8 |
| Example 36 | A methyl vinyl ether-maleic anhydride (50/50) copolymer(18) | 47 | A reaction product between N-(2-aminoethyl)piperazine and DMF (Reference Example 10) | 66.3 |

Table 8 (continued②)

| No. | Reaction solvents | | | |
|---|---|---|---|---|
| | Solvents I | | Solvents II | |
| | Kind | amount (ml) | Kind | amount (ml) |
| Example 21 | DMF | 100 | Xylene | 400 |
| Example 22 | DMF | 200 | Cumene | 450 |
| Example 23 | DMF | 50 | Xylene | 600 |
| Example 24 | DMF | 100 | Xylene | 400 |
| Example 25 | DMF | 100 | Xylene | 500 |
| Example 26 | DMF | 200 | Cumene | 400 |
| Example 27 | DMF | 100 | Xylene | 400 |
| Example 28 | DMF | 100 | Xylene | 400 |
| Example 29 | DMF | 200 | Xylene | 400 |
| Example 30 | DMF | 100 | Xylene | 500 |
| Example 31 | Methyl-formamide | 50 | Xylene | 400 |
| Example 32 | DMF | 100 | Xylene | 500 |
| Example 33 | DMF | 200 | Xylene | 250 |
| Example 34 | DMF | 80 | Xylene | 400 |
| Example 35 | Methyl-formamide | 40 | Xylene | 400 |
| Example 36 | DMF | 300 | Xylene | 300 |

Table 8 (continued③)

| No. | Reaction conditions | | Yields |
|---|---|---|---|
| | Temperatures (℃) | Hours (Hr) | (g) |
| Example 21 | 140 | 9 | 100.3 |
| Example 22 | 153 | 11 | 88.1 |
| Example 23 | 140 | 7 | 60.2 |
| Example 24 | 140 | 5 | 122.0 |
| Example 25 | 140 | 6 | 103.1 |
| Example 26 | 153 | 12 | 86.3 |
| Example 27 | 140 | 11 | 85.2 |
| Example 28 | 140 | 7 | 103.3 |
| Example 29 | 140 | 9 | 117.5 |
| Example 30 | 140 | 5 | 103.4 |
| Example 31 | 140 | 4 | 101.1 |
| Example 32 | 140 | 4 | 100.2 |
| Example 33 | 140 | 9 | 163.5 |
| Example 34 | 140 | 6 | 100.5 |
| Example 35 | 140 | 6 | 99.9 |
| Example 36 | 140 | 9 | 75.7 |

Table 8(continued ④)

| No. | Viscosity of copolymers | | | Infrared spectrum ($cm^{-1}$) |
|---|---|---|---|---|
| | Solvents used | Viscosity (mPa·s (cps)) | Appearance(color) | |
| Example 21 | Xylene | 1030 | White | 1772 Imide group<br>1700 Imide ring<br>1688 Shoulder |
| Example 22 | Xylene | 550 | Light yellow | 3280 Amino group, 1666 Shoulder<br>1772 Imide ring, 1528 Amide group<br>1698 Imide ring |
| Example 23 | Xylene | 760 | White | 1780 Imide ring<br>1705 Imide ring<br>1667 Shoulder |
| Example 24 | Xylene | 2300 | White | 1775 Imide ring<br>1698 Imide ring<br>1665 Shoulder |
| Example 25 | Xylene | 590 | White | 3287 Amino group, 1660 Shoulder<br>1773 Imide ring<br>1700 Imide ring |

Table 8(continued ⑤)

| No. | Viscosity of copolymers | | | Infrared spectrum ($cm^{-1}$) |
|---|---|---|---|---|
| | Solvents used | Viscosity (mPa·s (cps)) | Appearance(color) | |
| Example 26 | Xylene | 144 | White | 3284 Amino group, 1664 Shoulder<br>1785 Imide ring, 1528 Amide group<br>1706 Imide ring |
| Example 27 | Xylene | 507 | White | 1770 Imide ring<br>1695 Imide ring,<br>1666 Shoulder |
| Example 28 | Xylene | 765 | White | 3295 Amino group, 1667 Shoulder<br>1780 Imide ring<br>1700 Imide ring |
| Example 29 | Tetralin /DMI *1 | 33 | White | 1785 Imide ring<br>1702 Imide ring<br>1665 Shoulder |
| Example 30 | Xylene | 456 | White | 1770 Imide ring<br>1698 Imide ring<br>1668 Shoulder |

*1 (50/50/vol/vol)

Table 8(continued (6))

| No. | $^{13}$C-NMRspectrum (Intensity ratio) | | | Ratio of functional groups | |
|---|---|---|---|---|---|
| | W*2 | Y*3 | Z *4 | Repeating unit C or D/ repeating unit G or H | Formamide group/ secondary amino group |
| Example 21 | 2.00 | Not detected | 1.00 | 100/0 | 100/0 |
| Example 22 | 2.00 | 0.59 | 1.14 | 63/37 | 72/28 |
| Example 23 | 2.00 | Not detected | 1.00 | 100/0 | 100/0 |
| Example 24 | 2.00 | Not detected | 1.00 | 100/0 | 100/0 |
| Example 25 | 2.00 | Not detected | 0.63 | 100/0 | 63/37 |
| Example 26 | 2.00 | 0.33 | 1.24 | 75/25 | 93/7 |
| Example 27 | 2.00 | Not detected | 1.00 | 100/0 | 100/0 |
| Example 28 | 2.00 | Not detected | 0.83 | 100/0 | 83/17 |
| Example 29 | 2.00 | Not detected | 1.00 | 100/0 | 100/0 |
| Example 30 | 2.00 | Not detected | 1.00 | 100/0 | 100/0 |

*2 ··· 176~180ppm
*3 ··· 172~174ppm
*4 ··· 162ppm

Table 8(continued ⑦)

| No. | Viscosity of copolymers | | | Infrared spectrum |
|---|---|---|---|---|
| | Solvents used | Viscosity (mPa·s (cps)) | Appearance(color) | ($cm^{-1}$) |
| Example 31 | Xylene | 412 | Light yellow | 1790 Imide group<br>1700 Imide ring<br>1667 Shoulder |
| Example 32 | Xylene | 474 | Light yellow | 1780 Imide group<br>1702 Imide ring<br>1665 Shoulder |
| Example 33 | DMI | 77 | Light yellow | 1775 Imide ring<br>1700 Imide ring<br>1666 Shoulder |
| Example 34 | Xylene | 2150 | White | 1772 Imide ring<br>1698 Imide ring<br>1667 Shoulder |
| Example 35 | Xylene | 875 | White | 1775 Imide group<br>1703 Imide ring<br>1665 Shoulder |
| Example 36 | DMF | 89 | Light yellow | 1780 Imide group<br>1705 Imide ring<br>1668 Shoulder |

Table 8(continued ⑧)

| No. | ¹³C-NMRspectrum (Intensity ratio) W*2 | Y*3 | Z*4 | Ratio of functional groups: Repeating unit C or D/ repeating unit G or H | Formamide group/ secondary amino group |
|---|---|---|---|---|---|
| Example 31 | 2.00 | Not detected | 1.00 | 100/0 | 100/0 |
| Example 32 | 2.00 | Not detected | 1.00 | 100/0 | 100/0 |
| Example 33 | 2.00 | Not detected | 1.00 | 100/0 | 100/0 |
| Example 34 | 2.00 | Not detected | 1.00 | 100/0 | 100/0 |
| Example 35 | 2.00 | Not detected | 1.00 | 100/0 | 100/0 |
| Example 36 | 2.00 | Not detected | 1.24 | 100/0 | 100/0 |

Example 37

A 1 liter flask equipped with a thermometer, a stirrer, a dropping funnel and a Dean-Stark water separator was charged with 60 ml of xylene and 120 g of the maleic anhydride-grafted polypropylene as prepared in Reference Example 31, which was dissolved in the xylene with heating under the reflux thereof at 140°C.

Then, to the resultant solution was gradually added dropwise a solution of 16.2 g of the N-ethylethylenediamine p-toluenesulfonate as prepared in Reference Example 16 in 200 ml of DMI over a period of 3 hours, while the mixed reaction solution was maintained at the reflux temperature of xylene and the azeotropic water resulting from imidization

reaction was discharged outside the reaction system by means of the Dean-Stark water separator.

After 17 hours of reaction from the initiation of the dropwise addition of the above-mentioned N-ethylethylenediamine p-toluenesulfonate solution, the mixed reaction solution was cooled and poured into 5 liters of methanol to recover the purified product as precipitate.

The precipitate thus obtained was dissolved in toluene under heating and made into cast films, which were subjected to infrared (IR) spectrum analysis. As a result, the absorption based on p-toluenesulfonic acid was observed at 1122 $cm^{-1}$, 1035 $cm^{-1}$, 1010 $cm^{-1}$, 685 $cm^{-1}$ and 570 $cm^{-1}$ in addition to the absorption based on imide ring at 1772 $cm^{-1}$ and 1700 $cm^{-1}$. Thus it was confirmed that N-ethylethylamino groups had been bonded to polypropylene via imide bond in the form of p-toluenesulfonic acid.

Moreover, the precipitate was immersed in a water/methanol solution (1:1 by volume) containing 8.0 g of potassium carbonate overnight, filtered, thoroughly washed with water and methanol and dried to afford a copolymer at a yield of 121.4 g.

The copolymer thus obtained was soluble in toluene and xylene each under heating. A solution of the copolymer in xylene was made into cast films, which were subjected to IR spectrum analysis. As a result, the above-mentioned absorption based on p-toluenesulfonic acid at 1122 $cm^{-1}$, 1035 $cm^{-1}$, 1010 $cm^{-1}$, 685 $cm^{-1}$ and 570 $cm^{-1}$ had disappeared. Instead, there were observed the absorption based on the ethylethylamino groups at 3315 $cm^{-1}$ and the absorption based on the imide rings at 1772 $cm^{-1}$ and 1700 $cm^{-1}$.

Aside from the above, the copolymer was subjected to nuclear magnetic resonance spectrum analysis in $CDCl_3$ using a carbon isotope ($^{13}C$-NMR). As a result, a peak assigned to the carbonyl carbons of imide rings emerged at 176 to 180 ppm but there did not emerge a peak indicating the existense of the carbonyl carbons of amide groups at 172 to 174 ppm.

The copolymer thus obtained according to the present invention was dissolved in tetralin at 100°C into a 10% by weight of solution thereof, which was measured for viscosity by the use of a Brookfield type viscometer at the same temperature or 100°C. As a result, the viscosity was 152 mPa·s (152 cPs).

Example 38

A 1 liter flask equipped with a thermometer, a stirrer, a dropping funnel and a Dean-Stark water separator was charged with 200 ml of DMI and 15.7 g of a solution of N-methyl-1,3-propanediamine p-touenesulfonate in DMI as prepared in Reference Example 19 in DMI, which was dissolved in the DMI with heating to 80°C.

Then, to the resultant solution was gradually added dropwise a solution of 100 g of the styrene/maleic anhydride (95:5 molar ratio) coplymer (Mw=52000, Mn=25000) as prepared in Reference Example 33 in 400 ml of toluene.

After the completion of the dropwise addition, a sample was taken from the mixed reaction product and subjected to infrared (IR) spectrum analysis. As a result, the absorption based on the anhydride ring at 1780 $cm^{-1}$ had completely disappeared.

Heating for temperature raising of the mixed reaction product was continued to boil water at around 140°C as the azeotrope withe the refluxed xylene, and the boiled water was condensed and separated with the Dean-Stark water separator. The reaction was further continued at 140°C for 14 hours until the completion thereof where the azeotropic water formation was no longer observed. Subsequently the mixed reaction product was poured into 5 liters of methanol to recover the product as precipitate.

The precipitate thus obtained was dissolved in toluene and made into cast films, which were subjected to infrared (IR) spectrum analysis. As a result, the absorption based on p-toluenesulfonic acid was observed at 1100 $cm^{-1}$, and 580 $cm^{-1}$ in addition to the absorption based on imide ring at 1775 $cm^{-1}$ and 1695 $cm^{-1}$. Thus it was confirmed that N-methylpropylamino groups had been bonded to polystyrene via imide bond in the form of p-toluenesulfonic acid.

In addition, the precipitate was immersed in a water/methanol solution (1:1 by volume) containing 8.0 g of potassium carbonate overnight, filtered, thoroughly washed with water and methanol and dried to afford a copolymer at a yield of 100.3 g.

The copolymer thus obtained was soluble in toluene. A solution of the copolymer in toluene was made into cast films, which were subjected to IR spectrum analysis. As a result, the above-mentioned absorption based on p-toluenesulfonic acid at 1100 $cm^{-1}$ and 580 $cm^{-1}$ had disappeared. Instead, there were observed the absorption based on the N-methylpropylamino groups at 3320 $cm^{-1}$ and the absorption based on the imide rings at 1775 $cm^{-1}$ and 1695 $cm^{-1}$.

Aside from the above, the copolymer was subjected to nuclear magnetic resonance spectrum analysis in $CDCl_3$ using a carbon isotope ($^{13}C$-NMR). As a result, a peak assigned to the carbonyl carbons of imide rings emerged at 176 to 180 ppm but there did not emerge a peak indicating the existense of the carbonyl carbons of amide groups at 172 to 174 ppm.

The copolymer thus obtained according to the present invention was dissolved in xylene at 25°C into a 10% by weight of solution thereof, which was measured for viscosity by the use of a Brookfield type viscometer at the same temperature or 25°C. As a result, the viscosity was 670 mPa·s (670 cPs).

Examples 39 to 54

The procedures in Example 37 or 38 was repeated except that there were used the diamine salts as obtained in Reference Examples 16 to 20 and the maleic anhydride-modified copolymer as described in Reference Examples 32 and 33 as the starting copolymers. The results obtained are given in Table 9.

Measurements were made also of the viscosities of the copolymers thus obtained in the same manner as in Example 38, which results are given in Table 9.

Table 9

| No. | Starting copolymers: Kind | Starting copolymers: Amount(g) | Salts of diamine: Kind | Salts of diamine: Amount(g) |
|---|---|---|---|---|
| Example 39 | A maleic acid modified-product of an ethylene-propylene copolymer(2) | 100 | A N-ethyl-1,4-butanediamine ・p-toluenesulfonate (Reference Example 20) | 2.4 |
| Example 40 | A maleic acid modified-product of an ethylene-ethylacrylate copolymer(3) | 100 | A N-methyl-1,6-hexanediamine・p-toluenesulfonate (Reference Example 18) | 56.8 |
| Example 41 | A maleic acid modified-product of a styrene-butadiene copolymer(4) | 100 | A N-ethylethylenediamine・hydrochloride (Reference Example 17) | 1.6 |
| Example 42 | A maleic acid modified-product of a polyolefin elastomer(5) | 100 | A N-methyl-1,3-propanediamine ・p-toluenesulfonate (Reference Example 19) | 2.8 |
| Example 43 | A maleic product of a hydrogenated styrene-isoprene copolymer(6) | 100 | A N-ethylethylenediamine・p-toluenesulfonate (Reference Example 16) | 10.2 |
| Example 44 | A styrene-maleic anhydride (75/25) copolymer(12) | 90 | A N-ethylethylenediamine・hydrochloride (Reference Example 17) | 56.7 |
| Example 45 | An ethylene-ethyl acrylate-maleic anhydride (90/5/5) copolymer(13) | 100 | A N-methyl-1,6-hexanediamine・p-toluenesulfonate (Reference Example 18) | 52.9 |
| Example 46 | An ethylene-ethyl acrylate-maleic anhydride (88/10/2) copolymer(14) | 100 | A N-methyl-1,3-propanediamine ・p toluenesulfonate (Reference Example 19) | 19.1 |

Table 9 (continued①)

| No. | Starting copolymers: Kind | Starting copolymers: Amount(g) | Salts of diamine: Kind | Salts of diamine: Amount(g) |
|---|---|---|---|---|
| Example 47 | A maleic acid modified-product of a polyethylene(7) | 100 | A N-ethylethylenediamine・hydrochloride (Reference Example 17) | 29.0 |
| Example 48 | A maleic acid modified-product of a polybutadiene(8) | 100 | A N-methyl-1,3-propanediamine ・p-toluenesulfonate (Reference Example 19) | 14.7 |
| Example 49 | A maleic acid modified-product of a chloroprene rubber(9) | 100 | A N-methyl-1,3-propanediamine ・p-toluenesulfonate (Reference Example 19) | 10.7 |
| Example 50 | A maleic acid modified-product of a nitrile rubber(10) | 100 | A N-methyl-1,3-propanediamine ・p-toluenesulfonate (Reference Example 19) | 7.2 |
| Example 51 | An isobutylene-maleric anhydride (50/50) copolymer(15) | 80 | A N-ethylethylenediamine・hydrochloride (Reference Example 17) | 70.0 |
| Example 52 | A styrene-butadiene-maleic anhydride copolymer(16) | 100 | A N-methyl-1,3-propanediamine ・p-toluenesulfonate (Reference Example 19) | 11.1 |
| Example 53 | An ethylene-vinyl acetate-maleic anhydride(95/4.5/0.5) copolymer(17) | 100 | A N-methyl-1,3-propanediamine ・p-toluenesulfonate (Reference Example 19) | 6.2 |
| Example 54 | A methyl vinyl ether-maleic anhydride(50/50) copolymer(18) | 80 | A N-ethylethylenediamine・hydrochloride (Reference Example 17) | 72.9 |

Table 9 (continued②)

| No. | Reaction solvents | | | |
|---|---|---|---|---|
| | Solvents I | | Solvents II | |
| | Kind | amount (ml) | Kind | amount (ml) |
| Example 39 | DMI | 30 | Xylene | 500 |
| Example 40 | DMI | 200 | Cumene | 400 |
| Example 41 | DMI | 20 | Xylene | 500 |
| Example 42 | DMI | 30 | Xylene | 500 |
| Example 43 | DMI | 100 | Xylene | 400 |
| Example 44 | DMI | 200 | Cumene | 400 |
| Example 45 | DMI | 200 | Xylene | 400 |
| Example 46 | DMI | 100 | Xylene | 400 |
| Example 47 | DMSO | 150 | Xylene | 400 |
| Example 48 | DMI | 150 | Xylene | 400 |
| Example 49 | DMI | 100 | Xylene | 500 |
| Example 50 | DMI | 100 | Xylene | 500 |
| Example 51 | DMSO | 500 | Xylene | 200 |
| Example 52 | DMI | 150 | Xylene | 400 |
| Example 53 | DMI | 100 | Xylene | 500 |
| Example 54 | DMI | 500 | Xylene | 200 |

Table 9 (continued③)

| No. | Reaction conditions | | Yields |
|---|---|---|---|
| | Temperatures (℃) | Hours (Hr) | (g) |
| Example 39 | 140 | 8 | 100.4 |
| Example 40 | 153 | 12 | 106.0 |
| Example 41 | 140 | 7 | 100.0 |
| Example 42 | 140 | 4 | 100.1 |
| Example 43 | 140 | 7 | 102.1 |
| Example 44 | 153 | 9 | 104.3 |
| Example 45 | 140 | 11 | 112.2 |
| Example 46 | 140 | 9 | 101.7 |
| Example 47 | 140 | 10 | 112.9 |
| Example 48 | 140 | 4 | 101.5 |
| Example 49 | 140 | 4 | 100.9 |
| Example 50 | 140 | 4 | 100.5 |
| Example 51 | 140 | 8 | 111.5 |
| Example 52 | 140 | 5 | 101.0 |
| Example 53 | 140 | 6 | 100.0 |
| Example 54 | 140 | 8 | 113.0 |

Table 9(continued ④)

| No. | Viscosity of copolymers: Solvents used | Viscosity of copolymers: Viscosity (mPa·s (cps)) | Infrared spectrum ($cm^{-1}$) |
|---|---|---|---|
| Example 39 | Xylene | 1160 | 3325 Amino group(trace)<br>1774 Imide ring<br>1700 Imide ring |
| Example 40 | Xylene | 550 | 3310 Amino group<br>1770 Imide ring<br>1695 Imide ring<br>1670 (shoulder):Amide group |
| Example 41 | Xylene | 670 | 3320 Amino group<br>1776 Imide ring<br>1706 Imide ring |
| Example 42 | Xylene | 2250 | 3305 Amino group(trace)<br>1772 Imide ring<br>1698 Imide ring |
| Example 43 | Xylene | 610 | 3330 Amino group<br>1775 Imide ring<br>1700 Imide ring |

Table 9(continued ⑤)

| No. | Viscosity of copolymers | | Infrared spectrum ($cm^{-1}$) |
|---|---|---|---|
| | Solvents used | Viscosity(mPa·s(cps)) | |
| Example 44 | Xylene | 175 | 3320 Amino group<br>1780 Imide ring<br>1705 Imide ring<br>1665 (shoulder):Amide group |
| Example 45 | Xylene | 480 | 3310 Amino group<br>1780 Imide ring<br>1700 Imide ring |
| Example 46 | Xylene | 810 | 3330 Amino group<br>1775 Imide ring<br>1700 Imide ring |
| Example 47 | Tetralin /DMI *1 | 45 | 3305 Amino group<br>1780 Imide ring<br>1705 Imide ring |
| Example 48 | Xylene | 505 | 3315 Amino group<br>1775 Imide ring<br>1695 Imide ring |

*1 (50/50/vol/vol)

Table 9(continued ⑥)

| | $^{13}C$-NMRspectrum (Intensity ratio) | | Ratio of functional groups |
|---|---|---|---|
| No. | W*2 | Y*3 | Repeating unit C or D/repeating unit G or H |
| Example 39 | 2.00 | Not detected | 100/0 |
| Example 40 | 2.00 | 0.083 | 96/4 |
| Example 41 | 2.00 | Not detected | 100/0 |
| Example 42 | 2.00 | Not detected | 100/0 |
| Example 43 | 2.00 | Not detected | 100/0 |
| Example 44 | 2.00 | 0.174 | 92/8 |
| Example 45 | 2.00 | Not detected | 100/0 |
| Example 46 | 2.00 | Not detected | 100/0 |
| Example 47 | 2.00 | Not detected | 100/0 |
| Example 48 | 2.00 | Not detected | 100/0 |

*2 ··· 176~180ppm
*3 ··· 172~174ppm

Table 9(continued ⑦)

| No. | Viscosity of copolymers: Solvents used | Viscosity of copolymers: Viscosity (mPa·s (cps)) | Infrared spectrum ($cm^{-1}$) |
|---|---|---|---|
| Example 49 | Xylene | 410 | 3320 Amino group<br>1785 Imide ring<br>1705 Imide ring |
| Example 50 | Xylene | 515 | 3305 Amino group<br>1780 Imide ring<br>1695 Imide ring |
| Example 51 | DMI | 86 | 3320 Amino group<br>1770 Imide ring<br>1705 Imide ring |
| Example 52 | Xylene | 1950 | 3310 Amino group<br>1775 Imide ring<br>1700 Imide ring |
| Example 53 | Xylene | 810 | 3330 Amino group<br>1780 Imide ring<br>1700 Imide ring |
| Example 54 | DMI | 82 | 3325 Amino group<br>1770 Imide ring<br>1695 Imide ring |

Table 9(continued ⑧)

| No. | $^{13}C$-NMRspectrum (Intensity ratio) | | Ratio of functional groups |
|---|---|---|---|
| | W*2 | Y*3 | Repeating unit C or D/repeating unit G or H |
| Example 49 | 2.00 | Not detected | 100/0 |
| Example 50 | 2.00 | Not detected | 100/0 |
| Example 51 | 2.00 | Not detected | 100/0 |
| Example 52 | 2.00 | Not detected | 100/0 |
| Example 53 | 2.00 | Not detected | 100/0 |
| Example 54 | 2.00 | Not detected | 100/0 |

*2 ··· 176~180ppm
*3 ··· 172~174ppm

Example 55

A 1 liter flask equipped with a thermometer, a stirrer, a dropping funnel and a Dean-Stark water separator was charged with 300 ml of DMF and 120 g of the maleic anhydride-grafted polypropylene as prepared in Reference Example 31, which was dissolved in the xylene with heating under the reflux thereof at 140°C.

Then, to the resultant solution was gradually added dropwise a solution of 8.9 g of the reaction product of N-ethylethylenediamine and formamide as prepared in Reference Example 23 in 200 ml of DMF over a period of 3 hours, while the mixed reaction solution was maintained at the reflux temperature of xylene and the azeotropic water resulting from imidization reaction was discharged outside the reaction system by means of the Dean-Stark water separator.

The reaction was further continued at 140°C for 10 hours until the completion thereof where the azeotropic water formation was no longer observed. Subsequently the mixed reaction product was poured into 5 liters of methanol to recover the product as precipitate, which was washed with methanol and dried giving a yield of 125.3 g.

The resultant copolymer was in the form of white powder, soluble in xylene and dissolved in xylene into 10% by weight of the solution in xylene to measure the viscosity at 25°C by means of a Brookfield type viscometer. The result was 145 mPa·s (145 cPs).

A solution of the copolymer in xylene was made into cast films, which were subjected to IR spectrum analysis. As a result, the absorption based on formamide was observed at 1662 $cm^{-1}$ (shoulder) in addition to the absorption based on imide ring at 1772 $cm^{-1}$ and 1700 $cm^{-1}$, but there was not observed the absorption based on amino group.

Aside from the above, the copolymer was subjected to nuclear magnetic resonance spectrum analysis in $CDCl_3$ using a carbon isotope ($^{13}C$-NMR). As a result, there emerged a peak assigned to the carbonyl carbons of imide rings at 176 to 180 ppm at an intensity ratio of 2.00 and a peak indicating the existence of the carbonyl carbons of formamide at 162 ppm at an intensity ratio of 1.00, but a peak indicating the existence of the carbonyl carbons of amide groups at 172 to 174 ppm did not emerge.

As the result of the $^{13}C$-NMR analysis, the functional group ratio in molar ratio was determined to be repeating unit C/repeating unit G=100/0 and formamide group/secondary amino group=100/0.

Example 56

A 1 liter flask equipped with a thermometer, a stirrer, a dropping funnel and a Dean-Stark water separator was charged with 80 ml of DMF and 5.6 g of the reaction product of N-methyl-1,3-propane-diamine and DMF as prepared in Reference Example 26, which was dissolved in the DMF with heating to 80°C.

Then, to the resultant solution was gradually added dropwise a solution of 71 g of the styrene/maleic anhydride (95 : 5 molar ratio) copolymer (Mw=52000, Mn=25000) as prepared in Reference Example 33 in 350 ml of xylene.

After the completion of the dropwise addition, a sample was taken from the mixed reaction product and subjected to infrared (IR) spectrum analysis. As a result, the absorption based on the anhydride ring at 1780 $cm^{-1}$ had completely disappeared.

Heating for temperature raising of the mixed reaction product was continued to boil water at around 140°C as the azeotrope with the refluxed xylene, and the boiled water was condensed and separated with the Dean-Stark water separator. The reaction was further continued at 140°C for 9 hours until the completion thereof where the azeotropic water formation was no longer observed. Subsequently the mixed reaction product was poured into 5 liters of methanol to recover the product as precipitate, which was thoroughly washed with methanol and dried giving a yield of 73.8 g.

The resultant copolymer was in the form of white powders, soluble in toluene and dissolved in toluene into 10% by weight of the solution in toluene to measure the viscosity at 25°C by means of a Brookfield type viscometer. The result was 690 mPa·s (690 cPs).

A solution of the copolymer in toluene was made into cast films, which were subjected to IR spectrum analysis. As a result, the absorption based on formamide was observed at 1665 $cm^{-1}$ (shoulder) in addition to the absorption based on imide ring at 1775 $cm^{-1}$ and 1695 $cm^{-1}$, but there was not observed the absorption based on amino group.

Aside from the above, the copolymer was subjected to nuclear magnetic resonance spectrum analysis in $CDCl_3$ using a carbon isotope ($^{13}C$-NMR). As a result, there emerged a peak assigned to the carbonyl carbons of imide rings at 176 to 180 ppm at an intensity ratio of 2.00 and a peak indicating the existence of the carbonyl carbons of formamide at 162 ppm at an intensity ratio of 1.00, but a peak indicating the existence of the carbonyl carbons of amide groups at 172 to 174 ppm did not emerge.

As the result of the $^{13}C$-NMR analysis, the functional group ratio in molar ratio was determined to be repeating unit D/repeating unit H=100/0 and formamide gorup/secondary amino group=100/0.

Examples 57 to 72

The procedure in Example 55 or 56 was repeated except that there were employed the products as obtained in Reference Examples 16, 17 and 21 to 30 as the diamine salt or the reaction product of a diamine with a formyl group-containing compound; and the copolymers as described in Reference Examples 31 to 33 as the starting copolymer. However, in Examples 58, 61, 62 and 64, the mixed imidization reaction product was poured in methanol to recover the precipitate, which was immersed in a water/methanol solution (1:1 by volume) containing 8.0 g of potassium carbonate overnight, filtered, thoroughly washed with water and methanol, dried and calcined. The results obtained are given in Table 10.

Measurements were made also of the viscosities of the copolymers thus obtained, which results are given in Table 10.

Table 10

| No. | Starting copolymers: Kind | Starting copolymers: Amount (g) | Salts of diamine and reaction products between diamine and formyl group-containing compound: Kind | Salts of diamine and reaction products between diamine and formyl group-containing compound: Amount (g) |
|---|---|---|---|---|
| Example 57 | A maleic acid modified-product of an ethylene-propylene copolymer(2) | 120 | A reaction product between N-ethyl-1,4-butanediamine and DMF (Reference Example 29) | 1.24 |
| Example 58 | A maleic acid modified-product of an ethylene-ethyl acrylate copolymer(3) | 80 | A N-methyl-1,6-hexanediamine · p-toluenesulfonate (Reference Example 21) | 31.8 |
| Example 59 | A maleic acid modified-product of a styrene-butadiene copolymer(4) | 60 | A reaction product between N-ethylethylenediamine and formamide (Reference Example 23) | 1.0 |
| Example 60 | A maleic acid modified-product of a polyolefin elastomer(5) | 120 | A reaction product between N-methyl-1,3-propanediamine and DMF (Reference Example 26) | 1.4 |
| Example 61 | A maleic acid modified-product of hydrogenated styrene-isoprene copolymer(6) | 100 | A N-ethylethylenediamine · p-toluenesulfonate (Reference Example 16) | 17.0 |
| Example 62 | A styrene maleic anhydride (75/25) copolymer(12) | 70 | A N-ethylethylenediamine · hydrochloride (Reference Example 17) | 30.9 |
| Example 63 | An ethylene-ethyl acrylate-maleic anhydride (90/5/5) copolymer(13) | 71 | A reaction product between N-methyl-1,6-hexanediamine and formamide (Reference Example 30) | 22.1 |
| Example 64 | An ethylene-ethyl acrylate-maleic anhydride (88/10/2) copolymer(14) | 100 | A N-methyl-1,3-propanediamine · p-toluenesulfonate (Reference Example 22) | 24.3 |

Table 10 (coutinued ①)

| No. | Starting copolymers: Kind | Starting copolymers: Amount(g) | Salts of diamine and reaction products between diamine and formyl group-containing compound: Kind | Salts of diamine and reaction products between diamine and formyl group-containing compound: Amount(g) |
|---|---|---|---|---|
| Example 65 | A maleic acid modified-product of a polyethylene(7) | 100 | A reaction product between N-ethylethylenediamine and formic acid (Reference Example 24) | 33.1 |
| Example 66 | A maleic acid modified-product of a polybutadiene(8) | 100 | A reaction product between N-methyl-1,3-propanediamine and formamide (Reference Example 27) | 6.1 |
| Example 67 | A maleic acid modified-product of a chloroprene rubber(9) | 100 | A reaction product between N-methyl-1,3-propanediamine and formamide (Reference Example 27) | 5.6 |
| Example 68 | A maleic acid modified-product of a nitrile rubber(10) | 100 | A reaction product between N-methyl-1,3-propanediamine and formamide (Reference Example 27) | 3.7 |
| Example 69 | A isobutylene-maleic anhydride (50/50) copolymer(15) | 100 | A reaction product between N-ethylethylenediamine and DMF (Reference Example 25) | 104.7 |
| Example 70 | A styrene-butadiene-maleic anhydride copolymer(16) | 100 | A reaction product between N-methyl-1,3-propanediamine and formic acid (Reference Example 28) | 4.7 |
| Example 71 | An ethylene-vinyl acetate-maleic anhydride (90/4.5/0.5) copolymer(17) | 100 | A reaction product between N-methyl-1,3-propanediamine and formic acid (Reference Example 28) | 2.6 |
| Example 72 | A methyl vinyl ether-maleic anhydride (50/50) copolymer(18) | 47 | A reaction product between N-ethylethylenediamine and formamide (Reference Example 23) | 49.1 |

Table 10(continued②)

| No. | Reaction solvents | | | |
|---|---|---|---|---|
| | Solvents I | | Solvents II | |
| | Kind | amount(ml) | Kind | amount(ml) |
| Example 57 | DMF | 80 | Xylene | 500 |
| Example 58 | DMF | 200 | Cumene | 400 |
| Example 59 | DMF | 40 | Xylene | 600 |
| Example 60 | DMF | 80 | Xylene | 450 |
| Example 61 | DMF | 110 | Xylene | 400 |
| Example 62 | DMF | 200 | Cumene | 400 |
| Example 63 | DMF | 100 | Xylene | 400 |
| Example 64 | DMF | 100 | Xylene | 400 |
| Example 65 | DMF | 150 | Xylene | 400 |
| Example 66 | DMF | 200 | Xylene | 400 |
| Example 67 | Methyl-formamide | 50 | Xylene | 400 |
| Example 68 | DMF | 100 | Xylene | 450 |
| Example 69 | DMF | 250 | Xylene | 200 |
| Example 70 | DMF | 100 | Xylene | 400 |
| Example 71 | Methyl-formamide | 40 | Xylene | 400 |
| Example 72 | DMF | 350 | Xylene | 250 |

Table 10(continued③)

| No. | Reaction conditions | | Yields |
|---|---|---|---|
| | Temperatures (℃) | Hours (Hr) | (g) |
| Example 57 | 140 | 10 | 110.0 |
| Example 58 | 153 | 13 | 87.6 |
| Example 59 | 140 | 6 | 61.1 |
| Example 60 | 140 | 5 | 120.1 |
| Example 61 | 140 | 7 | 102.4 |
| Example 62 | 153 | 12 | 85.5 |
| Example 63 | 140 | 10 | 84.7 |
| Example 64 | 140 | 8 | 104.4 |
| Example 65 | 140 | 9 | 117.0 |
| Example 66 | 140 | 5 | 103.0 |
| Example 67 | 140 | 4 | 102.2 |
| Example 68 | 140 | 6 | 101.0 |
| Example 69 | 140 | 4 | 160.5 |
| Example 70 | 140 | 9 | 102.1 |
| Example 71 | 140 | 5 | 100.2 |
| Example 72 | 140 | 9 | 73.0 |

Table 10 (continued ④)

| No. | Viscosity of copolymers: Solvents used | Viscosity of copolymers: Viscosity (mPa·s (cps)) | Viscosity of copolymers: Appearance(color) | Infrared spectrum ($cm^{-1}$) |
|---|---|---|---|---|
| Example 57 | Xylene | 1140 | White | 1774 Imide group<br>1700 Imide ring<br>1667 Shoulder |
| Example 58 | Xylene | 556 | Light yellow | 3310 Amino group, 1670 Shoulder<br>1770 Imide ring, 1529 Amide group<br>1695 Imide ring |
| Example 59 | Xylene | 664 | White | 1776 Imide ring<br>1706 Imide ring<br>1668 Shoulder |
| Example 60 | Xylene | 2290 | White | 1772 Imide ring<br>1698 Imide ring<br>1665 Shoulder |
| Example 61 | Xylene | 620 | White | 3330 Amino group, 1664 Shoulder<br>1775 Imide ring<br>1700 Imide ring |

Table 10 (continued ⑤)

| No. | Viscosity of copolymers: Solvents used | Viscosity of copolymers: Viscosity (mPa·s (cps)) | Viscosity of copolymers: Appearance(color) | Infrared spectrum ($cm^{-1}$) |
|---|---|---|---|---|
| Example 62 | Xylene | 171 | White | 3320 Amino group, 1665 Shoulder<br>1780 Imide ring, 1527 Amide group<br>1705 Imide ring |
| Example 63 | Xylene | 491 | White | 1780 Imide ring<br>1700 Imide ring,<br>1666 Shoulder |
| Example 64 | Xylene | 805 | White | 3305 Amino group, 1666 Shoulder<br>1780 Imide ring<br>1705 Imide ring |
| Example 65 | Tetralin /DMI *1 | 44 | White | 1775 Imide ring<br>1705 Imide ring<br>1665 Shoulder |
| Example 66 | Xylene | 504 | White | 1775 Imide ring<br>1695 Imide ring<br>1667 Shoulder |

*1 (50/50/vol/vol)

Table 10 (continued ⑥)

| No. | $^{13}C$-NMRspectrum (Intensity ratio) | | | Ratio of functional groups | |
|---|---|---|---|---|---|
| | W*2 | Y*3 | Z *4 | Repeating unit C or D/ repeating unit G or H | Formamide group/ secondary amino group |
| Example 57 | 2.00 | Not detected | 1.00 | 100/0 | 100/0 |
| Example 58 | 2.00 | 0.49 | 1.12 | 67/33 | 75/25 |
| Example 59 | 2.00 | Not detected | 1.00 | 100/0 | 100/0 |
| Example 60 | 2.00 | Not detected | 1.00 | 100/0 | 100/0 |
| Example 61 | 2.00 | Not detected | 0.69 | 100/0 | 69/31 |
| Example 62 | 2.00 | 0.22 | 1.11 | 82/18 | 90/10 |
| Example 63 | 2.00 | Not detected | 1.00 | 100/0 | 100/0 |
| Example 64 | 2.00 | Not detected | 1.00 | 100/0 | 85/15 |
| Example 65 | 2.00 | Not detected | 1.00 | 100/0 | 100/0 |
| Example 66 | 2.00 | Not detected | 1.00 | 100/0 | 100/0 |

*2 ··· 176~180ppm
*3 ··· 172~174ppm
*4 ··· 162ppm

Table 10 (continued ⑦)

| No. | Viscosity of copolymers | | | Infrared spectrum |
|---|---|---|---|---|
| | Solvents used | Viscosity (mPa·s (cps)) | Appearance(color) | ($cm^{-1}$) |
| Example 67 | Xylene | 412 | Light yellow | 1785 Imide group<br>1705 Imide ring<br>1668 Shoulder |
| Example 68 | Xylene | 510 | Light yellow | 1780 Imide group<br>1695 Imide ring<br>1668 Shoulder |
| Example 69 | DMI | 85 | Light yellow | 1770 Imide ring<br>1705 Imide ring<br>1664 Shoulder |
| Example 70 | Xylene | 1955 | White | 1775 Imide ring<br>1700 Imide ring<br>1667 Shoulder |
| Example 71 | Xylene | 815 | White | 1780 Imide group<br>1700 Imide ring<br>1668 Shoulder |
| Example 72 | DMI | 80 | Light yellow | 1770 Imide group<br>1695 Imide ring<br>1669 Shoulder |

Table 10 (continued ⑧)

| No. | $^{13}$C-NMRspectrum (Intensity ratio) | | | Ratio of functional groups | |
|---|---|---|---|---|---|
| | W*2 | Y*3 | Z*4 | Repeating unit C or D/ repeating unit G or H | Formamide group/ secondary amino group |
| Example 67 | 2.00 | Not detected | 1.00 | 100/0 | 100/0 |
| Example 68 | 2.00 | Not detected | 1.00 | 100/0 | 100/0 |
| Example 69 | 2.00 | Not detected | 1.00 | 100/0 | 100/0 |
| Example 70 | 2.00 | Not detected | 1.00 | 100/0 | 100/0 |
| Example 71 | 2.00 | Not detected | 1.00 | 100/0 | 100/0 |
| Example 72 | 2.00 | Not detected | 1.00 | 100/0 | 100/0 |

*2 ... 176~180ppm
*3 ... 172~174ppm
*4 ... 162ppm

Comparative Example 1

An attempt was made to proceed with reaction by the use of the starting raw material same as in Example 1 except that 7.8 g of N-(2-aminoethyl)piperazine was employed in place of N-(2-aminoethyl)piperazine p-toluenesulfonate.

Immediately after the dropwise addition of 1/3 of the solution of N-(2-aminoethyl)piperazine, the reaction mixture turned out to be highly viscous, but the reaction was still continued to proceed with the imidization reaciton.

The resultant reaction mixture was poured into 5 liters of methanol, washed with methanol and dried. The copolymer thus obtained was dissolved in tetralin at 100°C to form 10% by weight of the solution, the Brookfield viscosity of which was measured at 100°C. The result was 4.51 Pa·s (4510 cPs),which led to the judgement that a partially crosslinked

product had been formed during the course of reaction.

Comparative Example 2

An attempt was made to proceed with reaction by the use of the starting raw material same as in Example 2 except that 7.6 g of N-(3-aminopropyl)piperazine was employed in place of N-(3-aminopropyl)piperazine p-toluenesulfonate.

Immediately after the start of distilling out of the azeotrope in the step of heating for temperature raising after the completion of the dropwise addition of the solution of styrene/maleic anhydride modified product, the reaction mixture turned out to be highly viscous, but the reaction was still continued to proceed with the dehydration.

The resultant reaction mixture was poured into 5 liters of methanol, washed with methanol and dried. The copolymer thus obtained was dissolved in xylene to form 10% by weight of the solution, the Brookfield viscosity of which was measured at 25°C. The result was 7.8 Pa·s (7800 cPs), which led to the judgement that a partially crosslinked product had been formed during the course of reaction.

Comparative Example 3

An attempt was made to proceed with reaction by the use of the starting raw material same as in Example 19 except that 10.0 g of N-(2-aminoethyl)piperazine was employed in place of the reaction product of N-(2-aminoethyl) piperazine and formamide.

Immediately after the dropwise addition of 1/3 of the solution of N-(2-aminoethyl)piperazine, the reaction mixture turned out to be highly viscous, but the reaction was still continued to proceed with the imidization reaciton.

The resultant reaction mixture was poured into 5 liters of methanol, washed with methanol and dried. The copolymer thus obtained was dissolved in tetralin at 100°C to form 10% by weight of the solution, the Brookfield viscosity of which was measured at 100°C. The result was 4.51 Pa·s (4510 cPs), which led to the judgement that a partially crosslinked product had been formed during the course of reaction.

Comparative Example 4

An attempt was made to proceed with reaction by the use of the starting raw material same as in Example 20 except that 6.8 g of N-(3-aminopropyl)piperazine was employed in place of the reaction product of N-(3-aminopropyl) piperazine and DMF.

Immediately after the start of distilling out of the azeotrope in the step of heating for temperature raising after the completion of the dropwise addition of the solution of styrene/maleic anhydride modified product, the reaction mixture turned out to be highly viscous, but the reaction was still continued to proceed with the dehydration.

The resultant reaction mixture was poured into 5 liters of methanol, washed with methanol and dried. The copolymer thus obtained was dissolved in xylene to form 10% by weight of the solution, the Brookfield viscosity of which was measured at 25°C. The result was 7.8 Pa·s (7800 cPs), which led to the judgement that a partially crosslinked product had been formed during the course of reaction.

Comparative Example 5

An attempt was made to proceed with reaction by the use of the starting raw material same as in Example 37 except that 5.3 g of N-ethylethylenediamine was employed in place of N-ethylethylenediamine p-toluenesulfonate.

Immediately after the dropwise addition of 1/3 of the solution of N-ethylethylenediamine, the reaction mixture turned out to be highly viscous, but the reaction was still continued to proceed with the imidization reaciton.

The resultant reaction mixture was poured into 5 liters of methanol, washed with methanol and dried. The copolymer thus obtained was dissolved in tetralin at 100°C to form 10% by weight of the solution, the Brookfield viscosity of which was measured at 100°C. The result was 5.3 Pa·s (5300 cPs), which led to the judgement that a partially crosslinked product had been formed during the course of reaction.

Comparative Example 6

An attempt was made to proceed with reaction by the use of the starting raw material same as in Example 38 except that 5.1 g of N-methyl-1,3-propanediamine was employed in place of N-methyl-1,3-propanediamine p-toluenesulfonate.

Immediately after the start of distilling out of the azeotrope in the step of heating for temperature raising after the completion of the dropwise addition of the solution of styrene/maleic anhydride modified product, the reaction mixture turned out to be highly viscous, but the reaction was still continued to proceed with the dehydration.

The resultant reaction mixture was poured into 5 liters of methanol, washed with methanol and dried. The copolymer thus obtained was dissolved in xylene to form 10% by weight of the solution, the Brookfield viscosity of which was measured at 25°C. The result was 7.5 Pa·s (7500 cPs), which led to the judgement that a partially crosslinked product had been formed during the course of reaction.

Comparative Example 7

An attempt was made to proceed with reaction by the use of the starting raw material same as in Example 55 except that 5.3 g of N-ethylethylenediamine was employed in place of N-ethylethylenediamine p-toluenesulfonate.

Immediately after the dropwise addition of 1/3 of the solution of N-ethylethylenediamine, the reaction mixture turned out to be highly viscous, but the reaction was still continued to proceed with the imidization reaciton.

The resultant reaction mixture was poured into 5 liters of methanol, washed with methanol and dried. The copolymer thus obtained was dissolved in tetralin at 100°C to form 10% by weight of the solution, the Brookfield viscosity of which was measured at 100°C. The result was 5.3 Pa·s (5300 cPs), which led to the judgement that a partially crosslinked product had been formed during the course of reaction.

Comparative Example 8

An attempt was made to proceed with reaction by the use of the starting raw material same as in Example 56 except that 5.1 g of N-methyl-1,3-propanediamine was employed in place of N-methyl-1,3-propanediamine p-toluenesulfonate.

Immediately after the start of distilling out of the azeotrope in the step of heating for temperature raising after the completion of the dropwise addition of the solution of styrene/maleic anhydride modified product, the reaction mixture turned out to be highly viscous, but the reaction was still continued to proceed with the dehydration.

The resultant reaction mixture was poured into 5 liters of methanol, washed with methanol and dried. The copolymer thus obtained was dissolved in xylene to form 10% by weight of the solution, the Brookfield viscosity of which was measured at 25°C. The result was 7.5 Pa·s (7500 cPs), which led to the judgement that a partially crosslinked product had been formed during the course of reaction.

Example 73

Conversion from formamide group to secondary amino group---

10.0 g of the copolymer as obtained in Example 26 was dissolved in 100 ml of methanol and further incorporated with 48 g of 35% hydrochloric acid under uniform stirring and dispersing. Thereafter, the resultant mixture was allowed to stand at room temperature for 2 days. The reaction mixture was concentrated under reduced pressure, and the concentrate thereof was poured into 500 ml of isopropanol to produce a precipitate, which was immersed in 300 ml of water/isopropanol solution (1:1 by volume) containing 14.5 g of sodium carbonate overnight. Then the precipitate was filtered, thoroughly washed with water and isopropanol and dried to afford a copolymer at a yield of 8.9 g. The resultant copolymer in the form of white powder and soluble in xylene was dissolved in xylene into 10% by weight of the solution at 25°C to measure the viscosity at 25°C by means of a Brookfield type viscometer. The result was 140 mPa·s (140 cPs).

As a result of IR spectrum analyis (KBr tablet method) of the copolymer, there were observed the absorption assigned to amide groups at 1664 $cm^{-1}$ (shoulder) and 1528 $cm^{-1}$ in addition to the absorption based on imide rings at 1785 $cm^{-1}$ and 1706 $cm^{-1}$, and the absorption based on amino groups at 3248 $cm^{-1}$.

Aside from the above, the copolymer was subjected to nuclear magnetic resonance spectrum analysis in $CDCl_3$ using a carbon isotope ($^{13}C$-NMR). As a result, there emerged a peak assigned to the carbonyl carbons of imide rings at 176 to 180 ppm at an intensity ratio of 2.00 and a peak assigned to the carbonyl carbons of amide groups at 172 to 174 ppm at an intensity ratio of 0.34 without a peak indicating the existence of carbonyl carbons of formamide groups at 162 ppm. As the result of the $^{13}C$-NMR analysis, the functional group ratio in molar ratio was determined to be repeating unit D/repeating unit H=75/25 and formamide group/secondary amino group=0/100.

Example 74

Conversion from formamide group to secondary amino group---

11.0 g of the copolymer as obtained in Example 62 was dissolved in 100 ml of methanol and further incorporated with 48 g of 35% hydrochloric acid under uniform stirring and dispersing. Thereafter, the resultant mixture was allowed to stand at room temperature for 2 days. The reaction mixture was concentrated under reduced pressure, and the

concentrate thereof was poured into 500 ml of isopropanol to produce a precipitate, which was immersed in 300 ml of water/isopropanol solution (1:1 by volume) containing 14.5 g of sodium carbonate overnight. Then the precipitate was filtered, thoroughly washed with water and isopropanol and dried to afford a copolymer at yield of 8.6 g. The resultant copolymer in the form of white powder and soluble in xylene was dissolved in xylene into 10% by weight of the solution at 25°C to measure the viscosity at 25°C by means of a Brookfield type viscometer. The result was 180 mPa·s (180 cPs).

As a result of IR spectrum analyis (KBr tablet method) of the copolymer, there were observed the absorption assigned to amide groups at 1665 $cm^{-1}$ (shoulder) and 1528 $cm^{-1}$ in addition to the absorption based on imide rings at 1780 $cm^{-1}$ and 1705 $cm^{-1}$, and the absorption based on amino groups at 3320 $cm^{-1}$.

Aside from the above, the copolymer was subjected to nuclear magnetic resonance spectrum analysis in $CDCl_3$ using a carbon isotope ($^{13}C$-NMR). As a result, there emerged a peak assigned to the carbonyl carbons of imide rings at 176 to 180 ppm at an intensity ratio of 2.00 and a peak assigned to the carbonyl carbons of amide groups at 172 to 174 ppm at an intensity ratio of 0.22 without a peak indicating the existence of carbonyl carbons of formamide groups at 162 ppm. As the result of the $^{13}C$-NMR analysis, the functional group ratio in molar ratio was determined to be repeating unit D/repeating unit H=82/18 and formamide group/secondary amino group=0/100.

## Claims

1. A copolymer or a salt thereof having a molecular weight of 3000 to 500 000 in terms of viscosity-average molecular weight, said copolymer comprising in a molecule thereof 20 to 99.8 mol% of the repeating unit A represented by the general formula (I); 50 to 0 mol% of the repeating unit B represented by the general formula (II); and 30 to 0.2 mol% of the repeating unit C represented by the general formual (III)

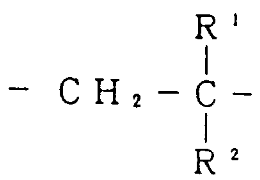

· · · (I)

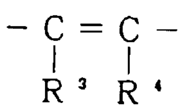

· · · (II)

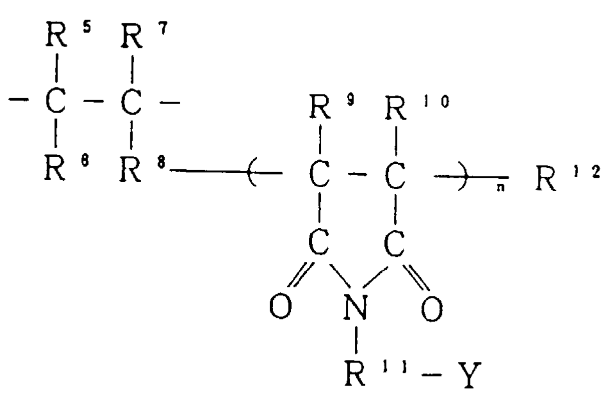

· · · (III)

wherein $R^1$, $R^2$, $R^5$, $R^6$ and $R^7$, independently of one another, are each a hydrogen atom, an alkyl group having 1 to 10 carbon atoms, a cycloalkyl group having 3 to 8 carbon atoms, an aryl group having 6 to 10 carbon atoms, an alkenyl group having 2 to 4 carbon atoms, an alkoxy group having 1 to 4 carbon atoms, an alkoxycarbonyl group having 1 to 18 carbon atoms, an alkylcarboxyl group having 1 to 17 carbon atoms, an alkylcarbonyl group having 1 to 6 carbon atoms, an arylcarbonyl group having 6 to 8 carbon atoms, a halogen atom or a nitrile group; $R^3$ and $R^4$, independently of one another, are each a hydrogen atom, an alkyl group having 1 to 4 carbon atoms, an alkenyl group having 2 to 4 carbon atoms or a halogen atom; $R^8$ is absent or denotes a methylene group or an

ethylene group; $R^9$ and $R^{10}$ independently of one another, are each a hydrogen atom, an alkyl group having 1 to 6 carbon atoms or an aryl group having 6 to 8 carbon atoms; $R^{11}$ is an alkylene group having 1 to 18 carbon atoms, a cycloalkylene group having 5 to 17 carbon atoms, an arylene group having 6 to 12 carbon atoms, a arylalkylene group having 7 to 12 carbon atoms or a polyoxyalkylene group having 4 to 30 carbon atoms; $R^{12}$ is a hydrogen atom or an alkyl group having 1 to 10 carbon atoms; Y is at least one kind of amino group selected from the general formulae (IV) to (VII)

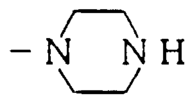 · · · (IV)

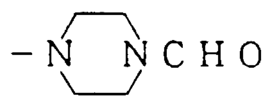 · · · (V)

$-NH-R^{13}$ (VI)

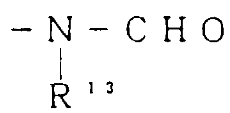 · · · (VII)

wherein $R^{13}$ in the general formulae (VI) and (VII) is an alkyl group having 1 to 6 carbon atoms; $R^1$ to $R^{13}$ may be the same or different among the repeating units; and n is an integer from 1 to 10.

**2.** A copolymer or a salt thereof having a molecular weight of 3000 to 500000 in terms of viscosity average molecular weight, said copolymer comprising in a molecule thereof 40 to 99.8 mol% of the repeating unit A represented by the general formula (I) as defined in claim 1; 50 to 0 mol% of the repeating unit B represented by the general formula (II) as defined in claim 1; and 60 to 0.2 mol% of the repeating unit D represented by the general formula (VIII)

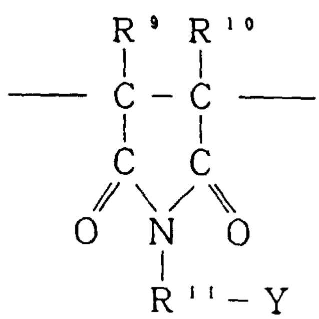 · · · (VIII)

wherein $R^9$ to $R^{11}$ and Y are each as defined in claim 1.

**3.** A process for producing the copolymer as set forth in Claim 1 or a salt thereof which comprises reacting a copolymer having in a molecule thereof 20 to 99.8 mol% of the repeating unit A represented by the general formula (I) as defined in claim 1; 50 to 0 mol% of the repeating unit B represented by the general formula (II) as defined in claim 1; and 30 to 0.2 mol% of the repeating unit E represented by the general formula (IX)

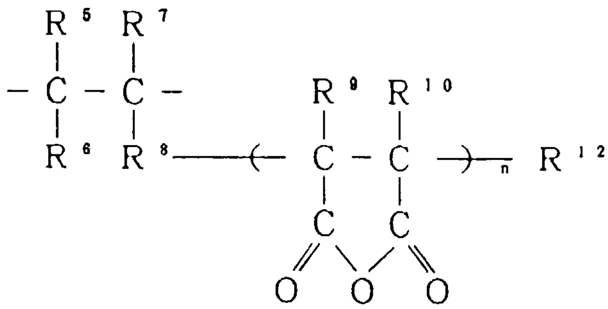

· · · (IX)

wherein $R^5$ to $R^{10}$, $R^{12}$ and n are each as defined in claim 1, with a salt of a piperazine derivative represented by the general formula (X)

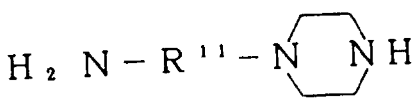

· · · (X)

wherein $R^{11}$ is as defined in claim 1, and thereafter, the resultant reaction product is brought into contact with a base to remove the acid.

4. A process for producing the copolymer as set forth in Claim 2 or a salt thereof which comprises reacting a copolymer having in a molecule thereof 40 to 99.8 mol% of the repeating unit A represented by the general formula (I) as defined in claim 1; 50 to 0 mol% of the repeating unit B represented by the general formula (II) as defined in claim 1; and 60 to 0.2 mol% of the repeating unit F represented by the general formula (XII)

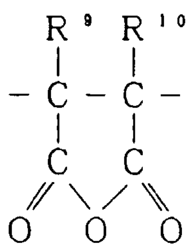

· · · (XII)

wherein $R^9$ and $R^{10}$ are each as defined in claim 1, with a salt of a piperazine derivative represented by the general formula (X) as defined in claim 3, and thereafter, the resultant reaction product is brought into contact with a base to remove the acid.

5. The process according to claim 3 or 4 wherein the salt of the general formula (X) as defined in claim 3 is replaced by a salt of a diamine represented by the general formula (XI)

$$H_2N\text{-}R^{11}\text{-}NH\text{-}R^{13} \qquad (XI)$$

wherein $R^{11}$ and $R^{13}$ are as defined in claim 1.

6. The process according to any of claims 3 to 5 wherein the reaction is carried out in the presence of at least one formyl group-containing compound selected from formamide, formic acid and derivatives thereof.

7. A process for producing the copolymer as set forth in claim 1 which comprises reacting a copolymer having in a

molecule thereof the repeating units A, B and E, wherein the repeating units and their amounts are as defined in claim 3, with a reaction product between the compounds represented by the general formula (X) as defined in claim 3 or (XI) as defined in claim 5 and at least one formyl group-containing compound as defined in claim 6.

**8.** A process for producing the copolymer as set forth in claim 2 which comprises reacting a copolymer having in a molecule thereof the repeating units A, B and F, wherein the repeating units and their amounts are as defined in claim 4, with a reaction product between the compounds represented by the general formula (X) as defined in claim 3 or (XI) as defined in claim 5 and at least one formyl group-containing compound as defined in claim 6.

**9.** A process for producing the copolymer or the salt thereof having in a molecule thereof the repeating units A, B and C, wherein Y is represented by the general formula (IV) or (VI) which comprises hydrolyzing under acidic condition the copolymer as set forth in Claim 1 wherein at least one of Y is represented by the general formula (V) or (VII) in the repeating unit C, and wherein the repeating units and their amounts and formulae (IV) to (VII) are as defined in claim 1.

**10.** A process for producing the copolymer or the salt thereof having in a molecule thereof the repeating units A, B and D, wherein Y is represented by the general formula (IV) or (VI) which comprises hydrolyzing under acidic condition the copolymer as set forth in claim 2 wherein at least one of Y is represented by the general formula (V) or (VII) in the repeating unit D, and wherein the repeating units and their amounts are as defined in claim 2 and formulae (IV) to (VII) are as defined in claim 1.

**Patentansprüche**

**1.** Copolymer oder ein Salz davon mit einem Molekulargewicht von 3.000 bis 500.000, ausgedrückt als Viskositätsmittel des Molekulargewichts, wobei das Copolymer in einem Molekül davon 20 bis 99,8 Mol-% der sich wiederholenden Einheit A der allgemeinen Formel (I), 50 bis 0 Mol-% der sich wiederholenden Einheit B der allgemeinen Formel (II) und 30 bis 0,2 Mol-% der sich wiederholenden Einheit C der allgemeinen Formel (III) umfaßt

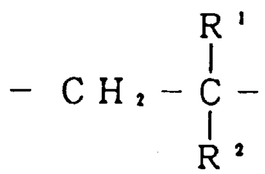

· · · (I)

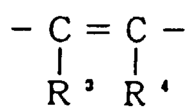

· · · (II)

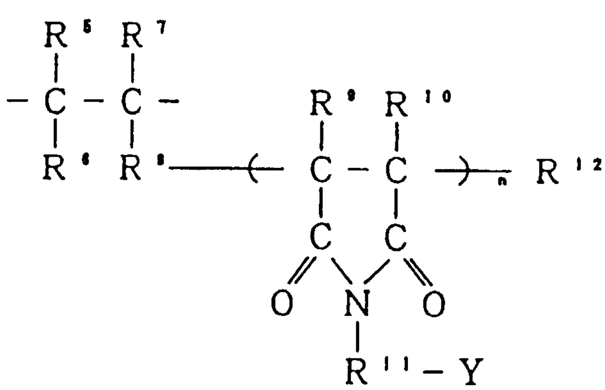

· · · (III)

in denen $R^1$, $R^2$, $R^5$, $R^6$ und $R^7$ unabhängig voneinander jeweils ein Wasserstoffatom, ein Alkylrest mit 1 bis 10 Kohlenstoffatomen, ein Cycloalkylrest mit 3 bis 8 Kohlenstoffatomen, ein Arylrest mit 6 bis 10 Kohlenstoffatomen, ein Alkenylrest mit 2 bis 4 Kohlenstoffatomen, ein Alkoxyrest mit 1 bis 4 Kohlenstoffatomen, ein Alkoxycarbonylrest mit 1 bis 18 Kohlenstoffatomen, ein Alkylcarboxylrest mit 1 bis 17 Kohlenstoffatomen, ein Alkylcarbonylrest mit 1 bis 6 Kohlenstoffatomen, ein Arylcarbonylrest mit 6 bis 8 Kohlenstoffatomen, ein Halogenatom oder eine Nitrilgruppe sind; $R^3$ und $R^4$ unabhängig voneinander jeweils ein Wasserstoffatom, ein Alkylrest mit 1 bis 4 Kohlenstoffatomen, ein Alkenylrest mit 2 bis 4 Kohlenstoffatomen oder ein Halogenatom sind; $R^8$ nicht vorhanden ist oder eine Methylengruppe oder eine Ethylengruppe kennzeichnet; $R^9$ und $R^{10}$ unabhängig voneinander jeweils ein Wasserstoffatom, ein Alkylrest mit 1 bis 6 Kohlenstoffatomen oder ein Arylrest mit 6 bis 8 Kohlenstoffatomen sind; $R^{11}$ ein Alkylenrest mit 1 bis 18 Kohlenstoffatomen, ein Cycloalkylenrest mit 5 bis 17 Kohlenstoffatomen, ein Arylenrest mit 6 bis 12 Kohlenstoffatomen, ein Arylalkylenrest mit 7 bis 12 Kohlenstoffatomen oder ein Polyoxyalkylenrest mit 4 bis 30 Kohlenstoffatomen ist; $R^{12}$ ein Wasserstoffatom oder ein Alkylrest mit 1 bis 10 Kohlenstoffatomen ist; Y wenigstens eine Art einer Aminogruppe ist, ausgewählt aus den allgemeinen Formeln (IV) bis (VII)

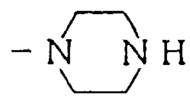 · · · (IV)

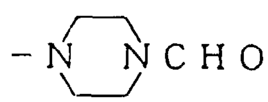 · · · (V)

$$-NH-R^{13} \quad (VI)$$

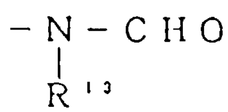 · · · (VII)

wobei $R^{13}$ in den allgemeinen Formeln (VI) und (VII) ein Alkylrest mit 1 bis 6 Kohlenstoffatomen ist;
wobei $R^1$ bis $R^{13}$ unter den sich wiederholenden Einheiten gleich oder verschieden sein können; und
n eine ganze Zahl mit einem Wert von 1 bis 10 ist.

**2.** Copolymer oder ein Salz davon mit einem Molekulargewicht von 3.000 bis 500.000, ausgedrückt als Viskositätsmittel des Molekulargewichts, wobei das Copolymer in einem Molekül davon 40 bis 99,8 Mol-% der in Anspruch 1 definierten, sich wiederholenden Einheit A der allgemeinen Formel (I), 50 bis 0 Mol-% der in Anspruch 1 definierten, sich wiederholenden Einheit B der allgemeinen Formel (II) und 60 bis 0,2 Mol-% der sich wiederholenden Einheit D der allgemeinen Formel (VIII) umfaßt

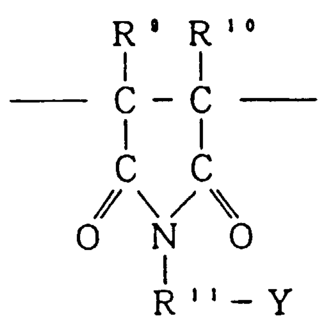 · · · (VIII)

wobei $R^9$ bis $R^{11}$ und Y jeweils wie in Anspruch 1 definiert sind.

**3.** Verfahren zur Herstellung des in Anspruch 1 genannten Copolymers oder eines Salzes davon, umfassend Umsetzen eines Copolymers, das in einem Molekül davon 20 bis 99,8 Mol-% der in Anspruch 1 definierten, sich wiederholenden Einheit A der allgemeinen Formel (I); 50 bis 0 Mol-% der in Anspruch 1 definierten, sich wiederholenden Einheit B der allgemeinen Formel (II) und 30 bis 0,2 Mol-% der sich wiederholenden Einheit E der allgemeinen Formel (IX) aufweist

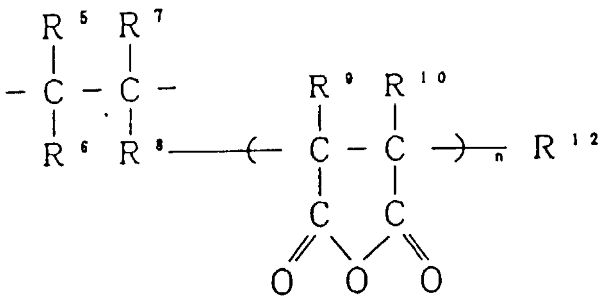 . . . (IX)

in der $R^5$ bis $R^{10}$, $R^{12}$ und n jeweils wie in Anspruch 1 definiert sind, mit einem Salz eines Piperazinderivats der allgemeinen Formel (X)

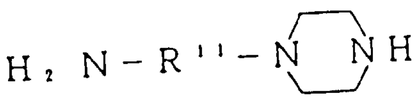 . . . (X)

in der $R^{11}$ wie in Anspruch 1 definiert ist, und
anschließendes Inkontaktbringen des entstandenen Reaktionsprodukts mit einer Base zur Entfernung der Säure.

**4.** Verfahren zur Herstellung des in Anspruch 2 genannten Copolymers oder eines Salzes davon, umfassend Umsetzen eines Copolymers, das in einem Molekül davon 40 bis 99,8 Mol-% der in Anspruch 1 definierten, sich wiederholenden Einheit A der allgemeinen Formel (I); 50 bis 0 Mol-% der in Anspruch 1 definierten, sich wiederholenden Einheit B der allgemeinen Formel (II) und 60 bis 0,2 Mol-% der sich wiederholenden Einheit F der allgemeinen Formel (XII) aufweist

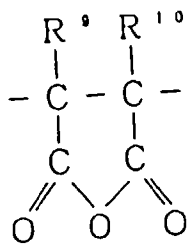 . . . (XII)

in der $R^9$ und $R^{10}$ jeweils wie in Anspruch 1 definiert sind,

mit einem in Anspruch 3 definierten Salz eines Piperazinderivats der allgemeinen Formel (X), und anschließendes Inkontaktbringen des entstandenen Reaktionsprodukts mit einer Base zur Entfernung der Säure.

**5.** Verfahren nach Anspruch 3 oder 4, wobei das in Anspruch 3 definierte Salz der allgemeinen Formel (X) durch ein Salz eines Diamins der allgemeinen Formel (XI) ersetzt wird

$$H_2N\text{-}R^{11}\text{-}NH\text{-}R^{13} \qquad (XI)$$

in der $R^{11}$ und $R^{13}$ wie in Anspruch 1 definiert sind.

**6.** Verfahren nach einem der Ansprüche 3 bis 5, wobei die Umsetzung in Gegenwart wenigstens einer formylgruppenhaltigen Verbindung, ausgewählt aus Formamid, Ameisensäure und Derivaten davon, durchgeführt wird.

**7.** Verfahren zur Herstellung des in Anspruch 1 angegebenen Copolymers, umfassend Umsetzen eines Copolymers, das in einem Molekül davon die sich wiederholenden Einheiten A, B und E aufweist, wobei die sich wiederholenden Einheiten sowie deren Mengen wie in Anspruch 3 definiert sind, mit einem Reaktionsprodukt aus den in Anspruch 3 definierten Verbindungen der allgemeinen Formel (X) oder der in Anspruch 5 definierten Verbindungen der allgemeinen Formel (XI) und wenigstens einer in Anspruch 6 definierten formylgruppenhaltigen Verbindung.

**8.** Verfahren zur Herstellung des in Anspruch 2 angegebenen Copolymers, umfassend Umsetzen eines Copolymers, das in einem Molekül davon die sich wiederholenden Einheiten A, B und F aufweist, wobei die sich wiederholenden Einheiten und deren Mengen wie in Anspruch 4 definiert sind, mit einem Reaktionsprodukt aus den in Anspruch 3 definierten Verbindungen der allgemeinen Formel (X) oder der in Anspruch 5 definierten Verbindungen der allgemeinen Formel (XI) und wenigstens einer in Anspruch 6 definierten formylgruppenhaltigen Verbindung.

**9.** Verfahren zur Herstellung des Copolymers oder des Salzes davon, wobei das Copolymer in einem Molekül davon die sich wiederholenden Einheiten A, B und C aufweist, wobei Y durch die allgemeine Formel (IV) oder (VI) wiedergegeben wird, umfassend Hydrolysieren des in Anspruch 1 angegebenen Copolymers unter saurer Bedingung, wobei wenigstens einer der Reste Y in der sich wiederholenden Einheit C durch die allgemeine Formel (V) oder (VII) wiedergegeben wird und wobei die sich wiederholenden Einheiten und deren Mengen sowie die Formeln (IV) bis (VII) wie in Anspruch 1 definiert sind.

**10.** Verfahren zur Herstellung des Copolymers oder des Salzes davon, wobei das Copolymer in einem Molekül davon die sich wiederholenden Einheiten A, B und D aufweist, wobei Y durch die allgemeine Formel (IV) oder (VI) wiedergegeben wird, umfassend Hydrolysieren des in Anspruch 2 angegebenen Copolymers unter saurer Bedingung, wobei wenigstens einer der Reste Y in der sich wiederholenden Einheit D durch die allgemeine Formel (V) oder (VII) wiedergegeben wird und wobei die sich wiederholenden Einheiten und deren Mengen wie in Anspruch 2 und die Formeln (IV) bis (VII) wie in Anspruch 1 definiert sind.

## Revendications

**1.** Copolymère ou sel de celui-ci ayant un poids moléculaire de 3000 à 500000 en poids moléculaire moyen en viscosité, ledit copolymère comprenant dans une molécule de celui-ci 20 à 99,8 % en moles de l'unité répétée A représentée par la formule générale (I) ; 50 à 0 % en moles de l'unité répétée B représentée par la formule générale (II) ; et 30 à 0,2 % en moles de l'unité répétée C représentée par la formule générale (III)

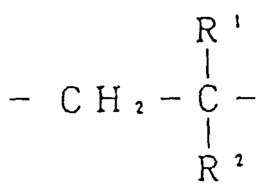

· · · (I)

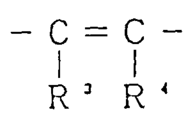

· · · (II)

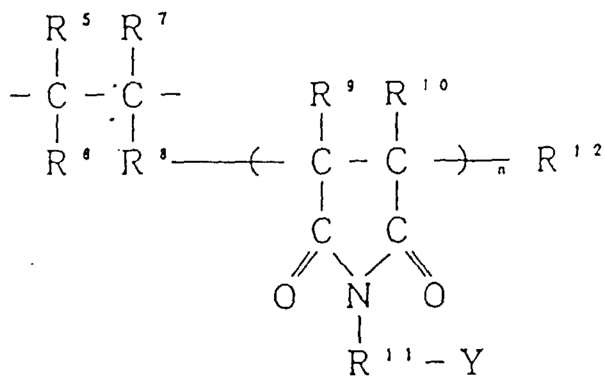

· · · (III)

dans lesquelles $R^1$, $R^2$, $R^5$, $R^6$ et $R^7$, indépendamment les uns des autres, sont chacun un atome d'hydrogène, un groupe alkyle ayant 1 à 10 atomes de carbone, un groupe cycloalkyle ayant 3 à 8 atomes de carbone, un groupe aryle ayant 6 à 10 atomes de carbone, un groupe alcényle ayant 2 à 4 atomes de carbone, un groupe alcoxy ayant 1 à 4 atomes de carbone, un groupe alcoxycarbonyle ayant 1 à 18 atomes de carbone, un groupe alkylcarboxyle ayant 1 à 17 atomes de carbone, un groupe alkylcarbonyle ayant 1 à 6 atomes de carbone, un groupe arylcarbonyle ayant 6 à 8 atomes de carbone, un atome d'halogène ou un groupe nitrile ; $R^3$ et $R^4$, indépendamment l'un de l'autre, sont chacun un atome d'hydrogène, un groupe alkyle ayant 1 à 4 atomes de carbone, un groupe alcényle ayant 2 à 4 atomes de carbone ou un atome d'halogène ; $R^8$ est absent ou représente un groupe méthylène ou un groupe éthylène ; $R^9$ et $R^{10}$, indépendamment l'un de l'autre, sont chacun un atome d'hydrogène, un groupe alkyle ayant 1 à 6 atomes de carbone ou un groupe aryle ayant 6 à 8 atomes de carbone ; $R^{11}$ est un groupe alkylène ayant 1 à 18 atomes de carbone, un groupe cycloalkylène ayant 5 à 17 atomes de carbone, un groupe arylène ayant 6 à 12 atomes de carbone, un groupe arylalkylène ayant 7 à 12 atomes de carbone ou un groupe polyoxyalkylène ayant 4 à 30 atomes de carbone ; $R^{12}$ est un atome d'hydrogène ou un groupe alkyle ayant 1 à 10 atomes de carbone ; Y est au moins une sorte de groupe amino choisi parmi les formules générales (IV) à (VII)

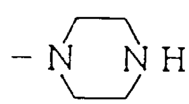

· · · (IV)

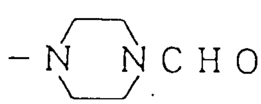

· · · (V)

$$-NH-R^{13} \qquad (VI)$$

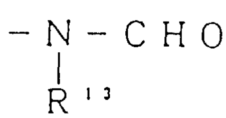

· · · (VII)

où $R^{13}$ dans les formules générales (VI) et (VII) est un groupe alkyle ayant 1 à 6 atomes de carbone ; $R^1$ à $R^{13}$ peuvent être identiques ou différents entre les unités répétées ; et n est un entier de 1 à 10.

**2.** Copolymère ou sel de celui-ci ayant un poids moléculaire de 3000 à 500000 en poids moléculaire moyen en viscosité, ledit copolymère comprenant dans une molécule de celui-ci 40 à 99,8 % en moles de l'unité répétée A représentée par la formule générale (I) telle que définie dans la revendication 1 ; 50 à 0 % en moles de l'unité répétée B représentée par la formule générale (II) telle que définie dans la revendication 1 ; et 60 à 0,2 % en moles de l'unité répétée D représentée par la formule générale (VIII)

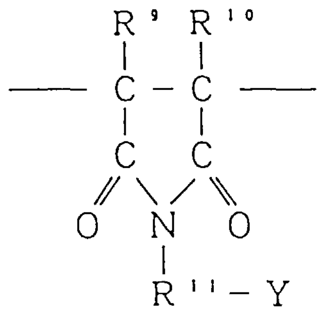

. . . (VIII)

dans laquelle $R^9$ à $R^{11}$ et Y sont chacun tels que définis dans la revendication 1.

**3.** Procédé pour produire le copolymère tel que défini dans la revendication 1 ou un sel de celui-ci, qui comprend la réaction d'un copolymère ayant dans une molécule de celui-ci 20 à 99,8 % en moles de l'unité répétée A représentée par la formule générale (I) telle que définie dans la revendication 1 ; 50 à 0 % en moles de l'unité répétée B représentée par la formule générale (II) telle que définie dans la revendication 1 ; et 30 à 0,2 % en moles de l'unité répétée E représentée par la formule générale (IX)

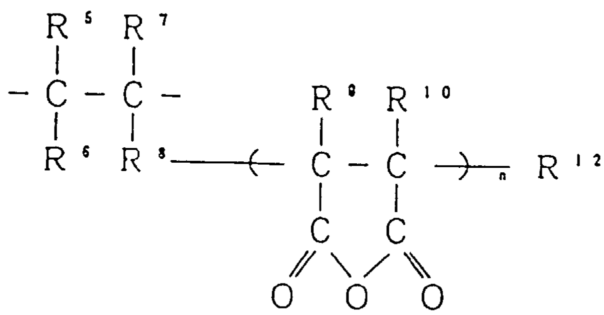

. . . (IX)

dans laquelle $R^5$ à $R^{10}$, $R^{12}$ et n sont chacun tels que définis dans la revendication 1,
avec un sel d'un dérivé de pipérazine représenté par la formule générale (X)

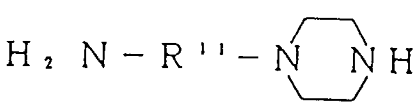

. . . (X)

dans laquelle $R^{11}$ est tel que défini dans la revendication 1, après quoi le produit de réaction résultant est mis en contact avec une base pour éliminer l'acide.

**4.** Procédé pour produire le copolymère tel que défini dans la revendication 2 ou un sel de celui-ci, qui comprend la réaction d'un copolymère ayant dans une molécule de celui-ci 40 à 99,8 % en moles de l'unité répétée A représentée par la formule générale (I) telle que définie dans la revendication 1 ; 50 à 0 % en moles de l'unité répétée B représentée par la formule générale (II) telle que définie dans la revendication 1 ; et 60 à 0,2 % en moles de l'unité répétée F représentée par la formule générale (XII)

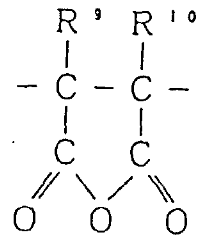

(XII)

dans laquelle $R^9$ et $R^{10}$ sont chacun tels que définis dans la revendication 1,
avec un sel d'un dérivé de pipérazine représenté par la formule (X) telle que définie dans la revendication 3, après quoi le produit de réaction résultant est mis en contact avec une base pour éliminer l'acide.

**5.** Procédé selon la revendication 3 ou 4, dans lequel le sel de la formule générale (X) telle que définie dans la revendication 3 est remplacé par un sel d'une diamine représentée par la formule générale (XI)

$$H_2N\text{-}R^{11}\text{-}NH\text{-}R^{13} \quad (XI)$$

dans laquelle $R^{11}$ et $R^{13}$ sont tels que définis dans la revendication 1.

**6.** Procédé selon l'une quelconque des revendications 3 à 5, dans lequel la réaction est effectuée en présence d'au moins un composé contenant un groupe formyle choisi parmi le formamide, l'acide formique et les dérivés de ceux-ci.

**7.** Procédé de production du copolymère tel que défini dans la revendication 1, qui comprend la réaction d'un copolymère ayant dans une molécule de celui-ci les unités répétées A, B et E, dans lequel les unités répétées et leurs quantités sont telles que définies dans la revendication 3, avec un produit de réaction entre les composés représentés par la formule générale (X) telle que définie dans la revendication 3 ou (XI) telle que définie dans la revendication 5 et au moins un composé contenant un groupe formyle tel que défini dans la revendication 6.

**8.** Procédé de production du copolymère tel que défini dans la revendication 2, qui comprend la réaction d'un copolymère ayant dans une molécule de celui-ci les unités répétées A, B et F, dans lequel les unités répétées et leurs quantités sont telles que définies dans la revendication 4, avec un produit de réaction entre les composés représentés par la formule générale (X) telle que définie dans la revendication 3 ou (XI) telle que définie dans la revendication 5 et au moins un composé contenant un groupe formyle tel que défini dans la revendication 6.

**9.** Procédé pour produire le copolymère ou le sel de celui-ci ayant dans une molécule de celui-ci les unités répétées A, B et C, où Y est représenté par la formule générale (IV) ou (VI), qui comprend l'hydrolyse, dans des conditions acides, du copolymère tel que défini dans la revendication 1 dans lequel au moins l'un des Y est représenté par la formule générale (V) ou (VII) dans l'unité répétée C, et dans lequel les unités répétées et leurs quantités et les formules (IV) à (VII) sont telles que définies dans la revendication 1.

**10.** Procédé pour produire le copolymère ou le sel de celui-ci ayant dans une molécule de celui-ci les unités répétées A, B et D, où Y est représenté par la formule générale (IV) ou (VI), qui comprend l'hydrolyse, dans des conditions acides, du copolymère tel que défini dans la revendication 2 dans lequel au moins l'un des Y est représenté par la formule générale (V) ou (VII) dans l'unité répétée D, et dans lequel les unités répétées et leurs quantités sont telles que définies dans la revendication 2 et les formules (IV) à (VII) sont telles que définies dans la revendication 1.